# EUROPÄISCHE PATENTSCHRIFT

(11) **EP 3 572 258 B1**
(45) Veröffentlichungstag und Bekanntmachung des Hinweises auf die Patenterteilung: **28.07.2021**
(21) Anmeldenummer: 19183827.5
(22) Anmeldetag: 23.06.2015
(51) Int. Cl.: B60J 7/06

(54) **PLANENAUFBAU**
TARPAULIN SUPERSTRUCTURE
SUPERCTRUCTURE DE BÂCHE

(30) Priorität: 23.06.2014 DE 202014005077 U
(43) Veröffentlichungstag der Anmeldung: 27.11.2019
(62) Teilanmeldung aus: 15747741.5
(73) Patentinhaber: European Trailer Systems GmbH, 47441 Moers (DE)
(72) Erfinder: Remmel, Roger, 42897 Remscheid (DE)
(74) Vertreter: Sparing, Rolf Klaus

(56) Entgegenhaltungen:
- EP-A1- 0 778 169
- DE-A1- 19 544 619
- GB-A- 2 257 999

## Beschreibung

Die Erfindung betrifft einen Planenaufbau für einen Unterbau, wie einen Lastkraftwagen, Anhänger, Auflieger, Bahnwaggon, Muldenkipper oder Container, umfassend ein Verdeckgestell und eine Plane aus wetterbeständigem Material, wobei das Verdeckgestell eine Mehrzahl von Holmen aufweist, die endseitig jeweils einen Schlitten aufweisen, der entlang einer Führung verlagerbar ist, wobei an jedem Paar gegenüberliegender Schlitten zumindest ein Bügel schwenkbar angeschlossen ist, der mit einem Bügel eines benachbarten Schlittenpaares eine Planenfalthilfe bildet, wobei die Bügel der Planenfalthilfe miteinander verbunden sind.

Solche Planenaufbauten sind aus der Praxis bekannt, um öffenbare Dächer freizugeben, wobei in der Regel die Bügel aus einem Paar gelenkig an den gegenüberliegenden Schlitten angeschlossener Stangen bestehen, die an ihren den Schlitten entgegengesetzten Enden wiederum ein Gelenk aufweisen, in dem eine weitere Stange schwenkbar gelagert ist. Die Platte, die das von den Schlitten beabstandete Gelenk aufweist, weist dann ein weiteres Gelenk für den verbundenen Bügel auf, der in gleicher Weise aufgebaut ist. Nachteilig bei den bekannten Planenaufbauten ist der Umstand, dass die Bügel einen relativ großen Winkel zur Horizontalen aufweisen, der zwar das Verlagern in vertikaler Richtung zum Anheben der Plane erleichtert, der aber die Übertragung von Kräften in Verlagerungsrichtung praktisch nicht begünstigt. Hierdurch kommt es leicht zu einem Verkanten der über Holme miteinander verbundenen Schlitten, der zu einem Blockieren des Verdeckgestells führt. Als Gegenmaßnahme wird der Holm, der die gegenüberliegenden Schlitten miteinander starr verbindet, häufig sehr massiv ausgestaltet, was wiederum zum Nachteil hat, dass die Toleranzen der Führung praktisch gegen Null gehen müssen, damit das Verdeckgestell bewegt werden kann. Ein weiterer Nachteil besteht darin, dass die miteinander verbundenen Bügel im Bereich ihrer Verbindung eine gegenseitige Relativbewegung in Richtung der Führung, in vertikaler Richtung und auch in der hierzu senkrechten Querrichtung ermöglichen, wodurch Kräfte und Momente, die einseitig in einen Schlitten eingeleitet werden, praktisch nicht über die Bügel in den benachbarten Schlitten übertragen werden können. Dies hat zur Folge, dass die Verdeckgestelle der bekannten Planenaufbauten stets eine symmetrische Einleitung der Verlagerungskraft erfordern, dass also beispielsweise die Verlagerungskraft mittig eingeleitet werden muss, in der Regel aber auf beiden Seiten in gleicher Weise eingeleitet werden muss. Ein weiterer Nachteil der bekannten Anordnung besteht darin, dass diese sich unter Faltung der Plane nur in einem Bereich des Unterbaus zusammenschieben lassen, der die Beladeöffnung des Unterbaus noch überdeckt, wodurch die Beladeöffnung nicht vollständig freigegeben ist. Dies ist besonders bei Bahnwaggons nachteilig, da hierdurch ein Teil des Laderaums verloren geht.

US 7 325 855 B2 beschreibt einen Planenaufbau für einen Sattelauflieger, der als Schiebebügelverdeck ausgebildet ist, wobei eine Plane aus wetterbeständigem Material von einem Verdeckgestell abgestützt ist. Hierbei umfasst das Verdeckgestell eine Mehrzahl von U-förmigen Holmen, die endseitig jeweils einen Schlitten aufweisen, der entlang jeweils einer in etwa in Höhe der Ladefläche angebrachten seitlichen Führung verlagerbar ist. Oberhalb der halben Höhe der U-förmigen Holme ist an den Holmen jeweils ein kurzer U-förmiger Bügel angeschlossen, der Teil einer Planenfalthilfe ist. An den Schlitten ist jeweils ein Lenker angeschlossen, der über ein Vebindungsglied mit einem spiegelbildlich an dem benachbarten Schlitten angeschlossenen Lenker gekoppelt ist, wobei an dem Verbindungsglied ein kurzer U-förmiger, zu den Holmen in einer parallelen Ebene liegender Abschnitt angeschlossen ist, sodass beim Zusammenschieben der Schlitten der Abschnitt durch das Zusammenschwenken der Lenker angehoben wird. Nachteilig bei dem bekannten Planenaufbau ist insbesondere, dass sehr stabil ausgeführte Endholme erforderlich sind, die den Planenausbau aussteifen und die bei einer Verlagerung entlang der Führung nicht verkannten. Hierdurch wird ein vergleichsweise großer Bereich überbaut, der nicht ohne Verlängerung der Ladefläche freigegeben werden kann. Weiterhin erfolgt keine Einleitung von Kräften von den Holmen in die benachbarten Holme, sodass die Holme bei der Verlagerung zum Verkanten neigen. Die Anordnung mit den Lenkern, dem Verbindungsglied und dem Abschnitt neigt zum Überschlagen, sodass hierdurch erhebliche Kräfte in die Plane eingeleitet werden. Nachteilig ist insbesondere der Umstand, dass zahlreiche Gelenke der Lenker, Hebel und Abschnitte ein Spiel in das System mit sich bringen, das es nicht erlaubt, zwei benachbarte Holme gemeinsam und beabstandet zu verlagern.

EP 0 421 554 A1 beschreibt einen Planenaufbau für einen Anhänger, der als Schiebedach ausgebildet ist, bei dem eine Plane aus wetterbeständigem Material auf einem Verdeckgestell abgestützt ist, und weitere Planen die Seitenwandungen verschließen. Das Verdeckgestell weist eine Mehrzahl von beiderseits einer als I-Profil ausgebildeten Führung im Dachbereich angeordneten Lenkern auf, die endseitig einen Schlitten aufweisen, der mit Tragrollen zwischen einer unteren Bahn und einer oberen Bahn des I-Profils gefangen ist. Die Lenker sind nach Art einer Kette gekoppelt, wobei an den in Öffnungsrichtung nach hinten weisenden Lenker ein Hubspriegel mit in etwa rechteckigen Querschnittprofil angeschlossen ist, so dass ein Bügel gebildet ist, der die Plane anhebt. Der in Schließrichtung vorderste Schlitten weist eine senkrechte Fanggabel auf, die einen weiteren Spriegel, der an einem sich mit dem vordersten Lenker kreuzenden zusätzlichen Hebel gekoppelt ist, nach Art eines Anschlags aufnimmt, wenn der Planenaufbau geschlossen ist. Gemäß einer weiteren Ausgestaltung kann der in Schließrichtung hinterste Schlitten als Doppelachsschlitten ausgebildet sein, der ein seitliches formstabiles Dreieck aufweist, dass einen Spriegel trägt, wobei das Dreieck um einen gebogenen Abschnitt in einen Verdeckgestellspeicherbereich verlagerbar ist. Bei dieser Ausgestaltung ist der Spriegel nicht fest mit einem der Hebel gekoppelt, sondern gelenkig mit beiden seitlichen Lenkern gekoppelt, damit das System die Schwenkbewegung nachvollziehen kann. Die in der I-Profilführung gefangenen Rollen des Schlittens verhindern dabei, dass der Spriegel bezüglich der Lenker überschlagen kann. Nachteilig bei dem bekannten Planenaufbau ist der Umstand, dass die gegenüberliegenden Schlitten nicht in einer vertikalen Ebene quer zur Verlagerungsrichtung miteinander gekoppelt sind, so dass es erforderlich ist, beiderseits einen Antrieb vorzusehen, der gleichzeitig eine Verlagerungsbewegung in die Schlitten einleitet.

US 5 924 759 A beschreibt einen Planenaufbau für einen Unterbau, der als Sattelauflieger ausgebildet ist, bei dem ein eine Plane aus wetterbeständigem Material tragendes Verdeckgestell eine Ladefläche nach Art eines Schiebebügelverdecks überbaut. Das Verdeckgestell weist eine Mehrzahl von U-förmig ausgebildeten Holmen auf, die endseitig jeweils einen Schlitten aufweisen, der entlang einer Führung im Bereich der Ladefläche verlagerbar ist. An jedem Paar gegenüberliegender Schlitten ist jeweils ein U-förmiger Bügel schwenkbar angeschlossen, der mit einem ebenfalls U-förmigen Bügel eines benachbarten Schlittenpaars eine Planenfalthilfe bildet. Die Bügel der Planenfalthilfe sind hierbei im Bereich ihrer den Schlitten abgekehrten, die Ladefläche überspannenden Abschnitte miteinander verbunden. Die Führung ist als nach außen weisendes, C-förmiges Doppelwinkelstück ausgebildet, das eine mit der Ladefläche im wesentlichen fluchtende Führungsbahn für eine Tragrolle bietet, während gegen eine im Profil dreieckige gegenüberliegende Schiene eine Gegenrolle mit komplementärem dreieckigem Profil den Schlitten bzgl. der Führung zentriert. Nachteilig bei dem bekannten Planenaufbau ist insbesondere der Umstand, dass die durch die Plane bzw. mit der Plane miteinander verbundenen Bügel zum Überschlagen neigen, wenn das Verdeckgestell zusammengeschoben wird, wodurch es zu einem Blockieren kommt. Weiter nachteilig ist der Umstand, dass die miteinander verbundenen Bügel einen sehr kleinen Winkel einschließen, so dass im Wesentlichen eine in die Vertikale eingeleitete resultierende Kraft beim Verschieben des Verdeckgestells eingeleitet wird, während es nicht zu einer in Verlagerungsrichtung des Verdeckgestells eingeleiteten Verschiebung kommt.

US 6 634 697 B1 beschreibt einen Planenaufbau nach Art eines Schiebebügelverdecks, bei dem eine Plane aus wetterbeständigem Material an ein zusammenschiebbares Verdeckgestell angeschlossen ist, wobei das Verdeckgestell eine Mehrzahl an U-förmigen Holmen aufweist, die endseitig jeweils einen Schlitten aufweisen, der entlang einer im Bereich der Ladefläche angeordneten beiderseitigen Führung verlagerbar ist. In einem oberen Bereich der Holme sind an den Holm U-förmige kurze Bügel schwenkbar angeschlossen, die die Faltung der Plane unterstützen. Nachteilig bei dem bekannten Planenaufbau ist insbesondere der Umstand, dass sehr massive Endholme vorgesehen sein müssen. Trotzdem neigen alle Holme dazu, bei einseitiger Krafteinleitung zu verkanten.

FR 2 653 478 A1 beschreibt einen Planenaufbau für einen Lastkraftwagen, der nach Art eines Schiebeverdecks ausgebildet ist, wobei ein eine Plane aus wetterbeständigem Material tragendes Verdeckgestell eine Mehrzahl von als Spriegel ausgebildeten Holmen aufweist, die endseitig jeweils einen Schlitten aufweisen, der entlang jeweils einer beiderseits der Dachöffnung vorgesehenen Führung verlagerbar ist. Hierbei weist die Führung ein Profil mit zwei C-förmigen Kammern zur Aufnahme von zwei Tragrollen des Schlittens auf, die ein Abheben der Tragrollen und damit des Schlittens von dem Profil verhindern. In einer nach oben offenen Kammer des Profils der Führung ist ferner eine Führungsrolle angeordnet, die mit Spiel zwischen den beiden vertikalen Wänden dieser Kammer den Schlitten an dem Profil zentriert. An jedem Schlitten ist in Öffnungsrichtung weisend ein langer Hebel gelenkig angeschlossen, der an dem dem Schlitten abgekehrten Ende einen Hubspriegel trägt und damit einen im Wesentlichen U-förmigen Bügel ausbildet. An der dem den Bügel tragenden Schlitten zugekehrten Seite des benachbarten Schlittens ist jeweils eine Lenkeranordnung aus zwei Teillenkern angeschlossen, die ein Kniegelenk ausbildet, wobei der erste Teillenker einen Ends mit dem Schlitten und anderen Ends mit dem zweiten Teillenker verbunden ist. Der zweite Teillenker ist anderen Ends mit dem Lenker des Bügels gelenkig verbunden. Im geschlossenen Zustand der Plane ist die Lenkeranordnung annähernd ausgestreckt ausgebildet, während sie beim Öffnen des Planenaufbaus zunächst überschlägt und sich absenkt, bis der erste Teillenker durch Zusammenschieben der Schlitten den Hubspriegel anhebt. Der bezüglich der Öffnung vorderste Schlitten ist als Doppelschlitten ausgebildet, der zwei im Wesentlichen unflexible langgestreckte Spriegel aufweist, wobei an dem in Richtung der Öffnung vordersten Schlitten ein Riegelglied mit einem Fangschlitz schwenkbar angeschlossen ist, das über einem Bügel mit einem gegenüberliegenden Schlitten gekoppelt ist, wobei der Fangschlitz einen an der Führung ausgebildeten vorspringenden Zapfen zur Bildung einer Verriegelung fängt. Nachteilig bei dem bekannten Planenaufbau ist dessen Neigung zum Verkanten, die es erforderlich oder zweckmäßig macht, eine beiderseitige synchrone Antriebsvorrichtung vorzusehen. Ferner ist die Planenfaltung aufwendig, da eine überschlagende Lenkeranordnung vorgesehen ist. Diese erlaubt es auch nicht, Kräfte von einem Paar gegenüberliegender Schlitten in das benachbarte Paar einzuleiten, zumal das zahlreiche Gelenke aufweisende Verdeckgestell hierzu ein großes Spiel mitbringt, das die Übertragung von Kräften behindert. Um das Riegelglied und den Bügel am in Richtung der Öffnung vordersten Schlitten in einer angehobenen Stellung zu halten ist es erforderlich, eine aufwendige Haltekonstruktion mit Federn vorzusehen, die verhindert, dass das Riegelglied herabfällt.

DE 10 2012 006 385 A1 beschreibt einen Planenaufbau für einen nach Art eines Sattelaufliegers ausgebildeten Unterbau, bei dem ein eine Plane aus wetterbeständigem Material tragendes Verdeckgestell eine Öffnung im Bereich des Dachs nach Art eines Schiebeverdecks öffnen und wieder verschließen kann. Das Verdeckgestell weist eine Mehrzahl von als langgestreckte Spriegel ausgebildeten Holmen auf, die endseitig jeweils einen Schlitten aufweisen, der entlang einer Führung im Bereich der Dachöffnung verlagerbar ist. In einem Bereich benachbart zu den Führungen weisen die Spriegel Aufnahmen für Falthilfen auf, die die Plane bei Zusammenschieben der Schlitten lokal anheben. An dem in Richtung der Dachöffnung vordersten Schlitten ist ein Winkelförmiges Endportal angeschlossen, das über Rollen an der Führung, die auch Tragrollen der Schlitten führt, gefangen ist. Es ist damit nicht möglich, das Endportal von der Führung abzuschwenken, beispielsweise um sich einen Zugang zu der Ladung zu verschaffen, ohne das Verdeck zusammenzuschieben. Gemäß einer alternativen Ausgestaltung ist neben den Tragrollen in einer Rolleneinheit noch eine Führungsrolle angeordnet, die senkrecht zu den Tragrollen orientiert ist, was aber erfordert, dass die Rolleneinheit schwenkbar an dem Endlaufteil befestigt ist, damit der Rollenwagen der Kontur folgen kann. Nachteilig ist hierbei insbesondere, dass die Rollen von dem vordersten Schlitten weit entfernt sind, so dass das Endlaufteil nur um einen kleinen Winkel verschwenkt wird. Ferner ist es erforderlich, die Rolle bzw. das Endlaufteil an einem Punkt des Endlaufteils anzuordnen, der weit unterhalb der Ebene der Führung liegt, so dass das Endlaufteil sehr massiv ausfällt. Weiterhin ist nachteilig, dass die die Schlitten verbindenden Faltelemente im Wesentlichen nur ein Aufstellen der Plane bewirken. Schließlich neigt jeder einzelne Schlitten, der nicht mit dem Endlaufteil verbunden ist, zum Verkanten, da er nur über einen steifen Spriegel mit dem gegenüberliegenden Schlitten gekoppelt ist, so dass die die Führung bereitstellenden Längsträger gegenüber den Spriegeln und Schlitten sowie Endlaufteil eher nachgiebig ausgebildet sein müssen, um Toleranzen auszugleichen.

US 4 740 029 A beschreibt einen Planenaufbau für einen nach Art eines Containers ausgebildeten Anhänger, bei dem die Plane über Ösen an einem im Dachbereich seitlich angeordneten Antrieb nach Art eines umlaufenden Seilzugs angeschlossen ist, wobei an einer ebenfalls angeschlossenen Tragplatte ein Bügel angeschlossen ist, der mit einem bzgl. der Öffnung vorderen Ende der Plane gekoppelt ist, wobei der Bügel durch eine Feder in eine vollständig geöffnete Position verschwenkbar ist. Zur Steuerung der Schwenkbewegung des Bügels ist dieser mit einem Seil verbunden.

US 5 524 953 A beschreibt einen Planenaufbau für einen Unterbau nach Art einer Kippmulde für einen Muldenkipper, der ein Verdeckgestell aufweist, das eine Plane aus wetterbeständigem Material trägt, wobei das Verdeckgestell mit der Plane durch Verlagerung entlang beiderseits des Unterbaus vorgesehener seitlicher Führungen geöffnet und geschlossen werden kann. Das Verdeckgestell weist eine Mehrzahl von Schlitten auf, die jeweils zwei Bügel tragen, die durch eine Federanordnung zueinander vorgespannt sind. Die den Schlitten abgekehrten Enden der Bügel sind mit der Plane verbunden, wobei die Bügel benachbarter Schlitten voneinander beabstandet sind. An dem vordersten Schlittenpaar ist ein Abdeckbügel schwenkbar angeschlossen, der über eine an dem Schlitten vorgesehene Nockenbahn in seinem Anstellwinkel verstellt werden kann. Nachteilig ist hierbei, dass der Abdeckbügel händisch betätigt werden muss, und dass in Ermangelung einer Abstützung der vorderste Schlitten stark einseitig belastet ist. Die Schlitten neigen insgesamt zum Verkanten, so dass es erforderlich ist, einen Antrieb vorzusehen, der beiderseits die Schlitten gleichzeitig antreibt.

DE 33 27 755 A1 beschreibt einen Planenaufbau für einen Unterbau, der nach Art eines Schiebeverdecks ausgebildet ist, bei dem ein Verdeckgestell eine Plane aus wetterbeständigem Material trägt, wobei das Verdeckgestell eine Mehrzahl von Schlitten umfasst, die jeweils in einer beiderseits der Dachöffnung vorgesehenen Führung mit einer Tragrolle derart gefangen sind, dass sie nicht aus der Führung entweichen können. An jedem Schlitten ist ein im Wesentlichen U-förmiger Bügel angeschlossen, der in Richtung der bei Öffnen des Verdecks sich bildenden Dachöffnung weist, wobei an dem jeweils davor gelegenen Schlitten an beiden Seiten ein Lenker vorgesehen ist, der gelenkig mit dem Schlitten und gelenkig mit einem Seitenbereich des Bügels verbunden ist. Eine Zugfeder ist einerseits mit dem Schlitten und andererseits mit dem Lenker des benachbarten Schlittens gekoppelt, und spannt das aus Bügel und Lenker gebildete Dreieck in Richtung auf eine Aufstellbewegung vor. An dem vordersten Schlitten ist ein Bügel angeschlossen, der mit einem weiteren Querglied verstärkt ist, wobei der Bügel an seinem dem Schlitten abgekehrten Ende eine senkrecht zu einem Schenkel des Bügels abstehende Platte aufweist, an die ein Rollenwagen gelenkig angeschlossen ist, dessen Tragrollen in der Führung der Tragrollen der Schlitten aufgenommen sind. Nachteilig bei dem bekannten Planenaufbau ist, dass der Bügel nicht zur Freigabe des von ihm überdeckten Bereichs vollständig bzw. bezüglich der Führung hochgeschwenkt werden kann, sei es zum Verschaffen eines Zugangs zum Ladegut bei geschlossenem Planenaufbau, sei es zum Abkippen einer Ladung oder sei es zum maximalen Freigeben der Dachöffnung. Weiter nachteilig ist die Tendenz des Verdeckgestells, beim Zusammenschieben zu verkanten. Auf Grund der eingebauten Federn neigen alle Bügel dazu, sich gleichzeitig aufzustellen, mit der Folge, dass eine erhöhte Kraft aufgewendet werden muss, um den Planenaufbau wieder zu schließen. Weiter nachteilig sind die gegenüberliegenden Schlitten nicht ohne Gelenkverbindung gekoppelt, so dass die Tragrollen vollständig in einer Führung umschlossen sein müssen.

US 1 863 957 A beschreibt einen Planenaufbau für einen Unterbau wie einen Lastkraftwagen, bei dem eine Plane aus wetterbeständigem Material von einem Verdeckgestell getragen ist, wobei das Verdeckgestell eine Mehrzahl von U-förmigen Holmen aufweist, die endseitig jeweils einen Schlitten aufweisen, der entlang einer Führung verlagerbar ist. An den Schlitten sind jeweils zwei Bügel schwenkbar angeschlossen, die mit der Plane verbunden sind, wobei die einander zugekehrten Bereiche der Bügel benachbarter Schlitten voneinander beabstandet sind. Da die Holme bei der Verlagerung zu verkanten neigen, ist es erforderlich, die Schlitten mit einer beiderseits vorgesehenen umlaufenden Verlagerungseinrichtung zu verlagern, wobei ein an die Plane angeschlossener Bügel gelenkig an dem in Dachöffnungsrichtung vordersten Schlitten angeschlossen ist, der die Plane von dem vordersten Bügel nach unten führt. Um diesen Bügel zu steuern, ist dieser Abdeckbügel mit einer gabelartigen Kulisse gesteuert, die mit einem Zapfen an der Seite des Unterbaus zusammenwirkt.

DE 34 18 060 A1 beschreibt einen Planenaufbau für einen Unterbau, der nach Art eines Schiebeverdecks ausgebildet ist und bei dem ein Verdeckgestell eine Plane aus wetterbeständigem Material trägt und in Falten legt. Das Verdeckgestell weist eine Mehrzahl von aus einer Tragrolle gebildeten Schlitten auf, die entlang einer beiderseits der Dachöffnung verlaufenden Führung verlagerbar sind, wobei an jedem Schlitten jeweils zwei Lenker angeordnet sind, die in einem Gelenk miteinander gekoppelt sind. Das eine der beiden Lenkerpaare weist außerhalb der gelenkigen Verbindung der Lenker einen Hubspriegel auf, der die gegenüberliegenden Lenker miteinander nach Art eines Bügels verbindet. Bei geschlossenem Planenaufbau liegen die Lenker im Wesentlichen horizontal im Bereich der Führung, während die Lenker im Bereich ihrer gelenkigen Verbindung und des Hubspriegels angehoben werden, um die Plane in Falten zu legen und die Dachöffnung durch Zusammenschieben des Planenaufbaus freizugeben. Hierbei ist vorgesehen, dass eine Hubunterstützung vorgesehen ist, die wahlweise durch eine die Lenker in Öffnunsgrichtung vorspannende, nahe dem Hubspriegel angeordnete Feder oder eine manuell betätigbare, zum Aufrichten der Lenker ausgebildete Anordnung gebildet sein kann. Durch letztere wird erreicht, dass die in Schließrichtung gesehen hinteren Lenkerpaare sich zuerst aufstellen. Nachteilig an dem bekannten Planenaufbau ist insbesondere der Umstand, dass gegenüberliegende Schlitten nicht ohne zwischenangeordenetes Gelenk miteinander gekoppelt sind und damit das Verdeckgestell nicht einseitig bedient werden können, da eine entsprechende Öffnungskraft in etwa mittig in das Verdeckgestell eingeleitet werden muss. Weiterhin ist nachteilig, dass entweder die Kraft zum Aufstellen der Lenkerpaare durch eine gesonderte Anordnung erfolgen muss, die eine höhere Einleitung von Energie auffordert, oder aber die Federn beim Schließen des Planenaufbaus gespannt werden müssen. Bei der Lösung mit Federn ist überdies davon auszugehen, dass sich die der Dachöffnung nächst gelegenen Lenkerpaare zuerst aufstellen, da diese den geringsten Reibungswiderstand bzgl. der Führung aufweisen.

DE 10 2008 000 899 A1 beschreibt einen Planenaufbau für einen Unterbau, bei dem ein Verdeckgestell eine Plane aus wetterbeständigem Material trägt und in Falten legt. Das Verdeckgestell umfasst eine Mehrzahl von mit Rollen ausgestatteten Schlitten, wobei entlang einer beiderseits der Dachöffnung angeordneten Führung verlagerbarer Schlitten über eine Lenkeranordnung miteinander gekoppelt sind. Die Lenkeranordnung umfasst einen ersten, an dem einen Schlitten gelenkig angeschlossenen Lenker und einen zweiten, an dem anderen Schlitten gelenkig angeordneten Lenker, wobei die den Schlitten jeweils abgekehrten Enden der Lenker in einem Verbindungsglied gelenkig gelagert sind. Hierzu ist das Verbindungsglied aus zwei Teilen ausgeführt, die jeweils einen Zapfenabschnitt aufweisen, der in einer Bohrung des komplementären Teils einführbar ist und eine Bohrung an den Lenkern zur Bildung des Gelenks durchsetzt. Bei dem als Spritzgussteil ausgeführten Verbindungsglied sind Begrenzungsflächen vorgesehen, die sicherstellen, dass das Lenkerpaar nicht über eine im Wesentlichen horizontal ausgestreckte Lage hinaus nach untern durchschlagen kann.

DE 195 44 619 A1 beschreibt einen Aufbau eines Lastkraftwagens mit einem als Schiebedach ausgebildeten Verdeckgestell, an dem eine wetterbeständige Dachplane angeschlossen ist. Das Verdeckgestell umfasst eine Mehrzahl von langgestreckten Holmen, an deren beiden Enden jeweils ein Schlitten angeschlossen ist, der entlang einer Führungsschiene verlagerbar ist. An jedem Paar gegenüberliegender Schlitten ist jeweils eine Strebe gelenkig angeschlossen, die mit einem Hubholm verbunden ist und mit diesem einen Bügel ausbildet. Die Streben der bezüglich der Führungsschiene benachbarter Schlitten sind beide in einem Gelenk mit dem Hubholm und damit zugleich auch miteinander verbunden und definieren damit eine Planenfalthilfe. Der Hubholm weist hierbei Begrenzungen auf, die den Winkel, den eine Strebe zu dem Hubholm einnehmen kann, begrenzt.

Es ist die Aufgabe der Erfindung, einen Planenaufbau anzugeben, der mit geringem Eigengewicht ein zuverlässiges Abdecken eines Unterbaus ermöglicht.

Diese Aufgabe wird erfindungsgemäß mit den Merkmalen eines unabhängigen Anspruchs gelöst.

Gemäß der Erfindung ist ein Planenaufbau für einen Unterbau, wie einen Lastkraftwagen, Anhänger, Auflieger, Bahnwaggon, Muldenkipper oder Container, geschaffen, umfassend ein Verdeckgestell und eine Plane aus wetterbeständigem Material, wobei das Verdeckgestell eine Mehrzahl von Holmen aufweist, die endseitig jeweils einen Schlitten aufweisen, der entlang einer Führung verlagerbar ist. An jedem Paar gegenüberliegender Schlitten ist zumindest ein Bügel schwenkbar angeschlossen, der mit einem Bügel eines benachbarten Schlittenpaars eine Planenfalthilfe bildet, wobei die Bügel der Planenfalthilfe miteinander verbunden sind. Hierbei weisen die verbundenen Bügel einen Schwenkwinkelbegrenzer auf, der nur eine begrenzte Verschwenkung der Bügel zulässt; hierdurch wird vorteilhaft vermieden, dass die Bügel bei Verlagern der Schlitten in Richtung auf eine geöffnete Position überschlagen, das heißt der in Öffnungsrichtung hintere Bügel wird nach unten verschwenkt, während der in Öffnungsrichtung vordere Bügel nach oben verschwenkt wird, so dass die ursprünglich benachbarten Basen der Bügel über- bzw. untereinander liegen, und das Verdeck insgesamt blockiert.

Der Schwenkwinkelbegrenzer stellt vorzugsweise darüber hinaus sicher, dass beim Ziehen in Richtung eines geschlossenen Planenaufbaus die in den vorderen Bügel eingeleiteten Zugkräfte auf den hinteren Bügel übertragen werden, und dieser nicht unter eine Winkelposition herabsinkt, die die Planenfalthilfe im geschlossenen Zustand des Planenaufbaus einnimmt. Zwar übernimmt auch die Plane diese Funktion teilweise, wenn sie mit beiden Bügeln verbunden ist, allerdings entlastet der Schwenkwinkelbegrenzer in soweit die Plane, die beschädigungsanfällig ist und deren Reparatur ausgesprochen zeit- und kostenaufwendig ist. Zweckmäßigerweise sind zumindest die Bügel oder die Holme, besser aber sowohl die Bügel als auch die Holme mit der Plane verbunden, so dass die Plane bei geschlossenem Planenaufbau eng an dem Verdeckgestell anliegt, während sie bei zusammengeschobenem Planenaufbau in Falten gelegt ist, indem sie im Bereich der aneinander anstoßenden benachbarten Bügel angehoben wird und im Bereich der Holme in ihrer ursprünglichen Höhe verbleibt.

Der Schwenkwinkelbegrenzer weist erfindungsgemäß zwei Aufnahmen zur parallelen Aufnahme von zwei zylindrischen Rohrabschnitten auf, wobei in jede Aufnahme einer der zylindrischen Rohrabschnitte umfangsmäßig aufgenommen werden kann. Im Umfang der Aufnahmen weisen diese eine schlitzartige Ausnehmung auf, in der ein von den jeweiligen Bügel radial vorstehendes Teil gefangen ist, und in Erstreckungsrichtung des Schlitzes nur eine durch die Begrenzungen des Schlitzes vorgegebene maximale Schwenkbewegung ausführen kann. In Richtung quer zu der Erstreckung des Schlitzes kann das gefangene Teil keinerlei Bewegung ausführen, so dass der Schwenkwinkelbegrenzer zugleich zweckmäßig eine Bewegung der beiden Rohrabschnitte in Y-Richtung, das heißt in Richtung der Erstreckung der Rohrabschnitte, verhindert. Es versteht sich, dass die schlitzartige Ausnehmung hierzu senkrecht zu der Achse der Rohrabschnitte bzw. der Aufnahme verläuft, wobei der Winkelbereich abzüglich der Stärke des radial vorstehenden Teils den Schwenkwinkel begrenzt.

Zweckmäßigerweise ist der Schwenkwinkelbegrenzer als einstückiges Teil aus Kunststoff ausgebildet, das beispielsweise im Spritzgussverfahren hergestellt ist. Es ist aber auch möglich, den Schwenkwinkelbegrenzer als Aluminium-Druckgussteil auszubilden, das wenig schlag- und beschädigungsempfindlich ist. Die Schwenkwinkelbegrenzer lassen sich auf diese Weise kostengünstig in großer Stückzahl herstellen, wobei für den Einbau in dem Verdeckgestell lediglich ein rohrförmiger Abschnitt des Bügels, der aus mehreren rohrförmigen Abschnitten, die teils langgestreckt, teils gebogen sind, zusammengesetzt ist, durch die Aufnahme des Schwenkwinkelbegrenzers durchgeführt werden muss, wobei der Bügel anschließend aus seinen Elementen zusammengesetzt wird.

Zweckmäßigerweise sind an jedem Paar aneinander grenzender Bügel zwei Schwenkwinkelbegrenzer angeordnet, und zwar jeweils gegenüberliegend und beabstandet von der Mitte der Bügel, die in der Regel U-förmig ausgebildet sind, sodass der Schwenkwinkelbegrenzer nahe jeweils eines Schenkels, aber an der Basis des U-förmigen Bügels angeordnet ist. Alternativ kann ein einzelner Schwenkwinkelbegrenzer etwa mittig in der Basis von zwei Bügeln angeordnet werden, oder aber drei oder mehr Schwenkwinkelbegrenzer an die Basen benachbarter Bügel angeschlossen werden.

Die Verschwenkung des Bügels in dem Schwenkwinkelbegrenzer ist zweckmäßigerweise auf ca. 90° begrenzt, wodurch die Bügel von einer vollständig horizontalen Position in eine vollständig vertikale Position in dem Schwenkwinkelbegrenzer verschwenkt werden können. Hierdurch wird zum einen vorteilhaft erreicht, dass derselbe Schwenkwinkelbegrenzer für Bügel, die in verschiedenen Winkeln zur Horizontalen ihre Ausgangsstellung haben, eingesetzt werden kann, ohne dass für jede spezifische Paarung von Bügeln unterschiedliche Schwenkwinkelbegrenzer hergestellt werden müssen. Überdies ermöglicht der Schwenkwinkel von jeweils 90° für jeden der Bügel, dass beim Zusammenbau der Bügel diese flach auf den Boden gelegt werden können, ohne dass die Gefahr besteht, dass beim Herabdrücken der Bügel der Schwenkwinkelbegrenzer überlastet wird und zerspringt. Alternativ ist es auch möglich, den Schwenkwinkel, jeweils unter Berücksichtigung der Dicke des in den Schlitz eindringenden radial vorstehenden Teils, vorzugweise eines Niets, auf ca. 70° einzustellen, wenn der Anstellwinkel zur Horizontalen 20° beträgt, also jeweils komplementär zu dem Anstellwinkel und 90°.

Durch die schmale Ausgestaltung des Schlitzes verhindert der Schwenkwinkelbegrenzer vorteilhaft auch, dass die verbundenen Bügel gegenseitig in eine Richtung parallel zu ihren in den Aufnahmen aufgenommenen Achsen verlagert werden. Der Umstand, dass die Bügel bzw. die Basen der Bügel daran gehindert sind, gegenseitig in der Y-Richtung verschoben zu werden, steift vorteilhaft die Baugruppe aus den beiden Bügeln aus, sodass nicht nur Kräfte von einem Schlitten zum benachbarten Schlitten in X-Richtung über die beiden Bügel und den Schwenkwinkelbegrenzer übertragen werden, sondern darüber hinaus die Baugruppe auch Momente übertragen kann.

Gemäß einer bevorzugten Ausgestaltung ist vorgesehen, dass nur einer der in den Schwenkwinkelbegrenzer aufgenommenen Bügel ein mittleres, langgestrecktes Verbindungsstück aufweist. Der Schwenkwinkelbegrenzer hält die beiden Bügel mit ihren Basen zueinander parallel, sodass beim Einsatz von zwei Schwenkwinkelbegrenzern der Verbindungsbereich der Schwenkwinkelbegrenzer nicht doppelt ausgeführt sein muss, sondern nur einfach, sodass in dem Bereich zwischen zwei Schwenkwinkelbegrenzern an derselben Baugruppe aus zwei Bügeln die Basis eines der beiden Bügel ganz oder teilweise weggelassen werden kann. Zweckmäßigerweise ist der unvollständige Bügel der beim Öffnen des Planenaufbaus hintere, sodass die durch das Verlagern des Schlittens in den vorderen Bügel eingeleitete Kraft in Verlagerungsrichtung über den Bügel auf beide Seiten des Planenaufbaus übertragen wird. Besonders bevorzugt ist es, wenn bei dem vordersten Bügelpaar die beiden Bügel vollständig ausgeführt sind, damit die Masse des vordersten Bügelpaars höher ist als die der anderen Bügelpaare und damit die Gewichtskraft einer anfänglichen Aufstellbewegung des Bügelpaars entgegenwirkt, wodurch sich erst die anderen Bügelpaare zum Anheben der Plane falten.

Vorzugsweise nehmen die Bügel im geschlossenen Zustand des Planenaufbaus einen flachen Winkel von weniger als 45° gegen die Horizontale ein, sodass die Übertragung der in den Schlitten eingeleiteten Kraft mehr in Richtung der Führung als in einer vertikalen Richtung übertragen wird. Vorzugsweise beträgt der Winkel im geschlossenen Zustand weniger als 35° gegen die Horizontale, besonders bevorzugt weniger als 25°. Besonders günstig ist ein Winkel gegen die Horizontale von ca. 17° - 23°, also um ca. 20° gegen die Horizontale, bei dem die Übertragung von Kraft in die in Richtung der Führung verlaufende X-Richtung deutlich ausgeprägter ist als in die vertikal verlaufende Z-Richtung. Überdies führt ein flacher Anstellwinkel der Bügel bei entsprechend langen Schenkeln dazu, dass sich die Länge des Planenaufbaus mit vergleichsweise wenigen Teilen überbrücken lässt, sodass der Planenaufbau insgesamt ein geringes Gewicht und wenige Teile aufweist, was die Kraft zum Öffnen des Planenaufbaus weiter herabsetzt. Zugleich ist die Höhe der Bügel und der Holme damit klein, bezogen auf die Länge der Bügel, insbesondere ist die Länge der Bügel, das heißt der Abstand der Basis von der Anlenkung an den Schlitten, mindestens doppelt so groß, vorzugsweise sogar dreimal so groß wie die Höhe des Holms über der Anlenkung der Bügel. Hierdurch lässt sich ein vergleichsweise niedriger Planenaufbau schaffen, der entsprechend ein größeres Volumen des Unterbaus, beispielsweise eines Containers oder einer Kippmulde, zulässt, was insbesondere von Vorteil ist, wenn die Gesamthöhe begrenzt ist.

Gemäß einer bevorzugten Ausgestaltung ist vorgesehen, dass ein hinterer der Bügel von einem an einem Endanschlag des Verdeckgestells angeordneten Bügel beabstandet angeordnet ist. Der an dem Endanschlag des Verdeckgestells angeordnete Bügel ist mit der Plane verbunden und dient dazu, diese bei Erreichen einer vertikalen Schwenkstellung an dem Endanschlag nach oben zu verlagern. Auch ein hinterer der Bügel, also derjenige der Bügel, der an dem letzten Schlittenpaar angeordnet ist und von der Vorderseite weg weist, ist an der Plane angeschlossen, so dass bei Zusammenfalten des Planenaufbaus der hintere Bügel in die Vertikale verlagert wird und die Plane anhebt. Anders als die übrigen Bügel des Verdeckgestells sind der an dem Endanschlag vorgesehene Bügel und der letzte Bügel des verfahrbaren Teils des Verdeckgestells nicht miteinander verbunden, so dass dieselben standardisierten Teile auch bei unterschiedlichen Abmessungen des Unterbaus bei verändertem Abstand eingesetzt werden können. Ferner ist der Widerstand, der beim Zusammenfahren des Planenaufbaus überwunden werden muss, hierdurch herabgesetzt, wodurch die Faltenbildung erleichtert wird.

Zweckmäßigerweise ist vorgesehen, dass die Holme (umgekehrt) U-förmig ausgeführt sind, und dass eine Basis des U-förmigen Holms im geschlossenen Zustand des Planenaufbaus auf derselben Höhe angeordnet ist wie dem Schlitten abgekehrte Bereiche der Bügel. Hierdurch ergibt sich ein Planenaufbau, der im geschlossenen Zustand im Wesentlichen auf einer Höhe liegt, wenn die Plane an die Holme und die Basen der Bügel angeschlossen ist Alternativ ist es möglich, dass der Holm auf einer geringeren Höhe angeordnet ist als die minimale Höhe der Bügel. Die Plane ist ferner zweckmäßigerweise auch an den Schenkeln der U-förmigen Holme angeschlossen, möglicherweise auch zusätzlich im Bereich der Schlitten. Es ist möglich, die Plane auch an die Schenkel der U-förmigen Bügel anzuschließen. Durch die insgesamt geringe Bauhöhe des Planenaufbaus kann dieser insbesondere günstig zur Abdeckung von auf der Straße oder der Schiene zu transportierenden Containern eingesetzt werden.

Gemäß einem Aspekt ist ein Planenaufbau für einen Unterbau, wie einen Lastkraftwagen, Anhänger, Auflieger, Bahnwaggon, Muldenkipper oder Container geschaffen, umfassend ein Verdeckgestell und eine Plane aus wetterbeständigem Material, wobei das Verdeckgestell eine Mehrzahl von Holmen aufweist, die endseitig jeweils einen Schlitten aufweisen, der entlang einer Führung verlagerbar ist, wobei an jedem Paar gegenüberliegender Schlitten zumindest ein Bügel schwenkbar angeschlossen ist, der mit einem Bügel eines benachbarten Schlittenpaares eine Planenfalthilfe bildet, wobei die Bügel der Planenfalthilfe miteinander verbunden sind, wobei der Schlitten zumindest eine obere Tragrolle und zumindest eine untere Gegenrolle aufweist, wobei die zumindest eine obere Tragrolle und die zumindest eine untere Gegenrolle mit einer Umfangsfläche an den Schmalseiten einer im Querschnitt rechteckigen Führungsschiene der Führung anliegen, wobei mindestens eine der zumindest einen oberen Tragrolle und der zumindest einen unteren Gegenrolle beiderseits der Umfangsfläche jeweils einen Ringflansch aufweisen, und wobei die über den Durchmesser der Umfangsfläche vorstehenden, einander zugekehrten Stirnseiten der beiden Ringflansche die Breitseite der Führungsschiene teilweise einfassen. Die Ausgestaltung der Tragrolle oder der Gegenrolle, die den Anschluss des Schlittens an die rechteckige Führungsschiene sicherstellt, lässt nicht nur eine Verlagerung des Schlittens in Richtung der Führungsschiene zu, sondern verhindert darüber hinaus ein Herausgleiten der Tragrolle bzw. der Gegenrolle von der Führungsschiene, indem die Ringflansche die Breitseite der Führungsschiene einfassen, wobei der radiale Überstand der Ringflansche gegenüber der Umfangsfläche recht klein ist. Hierdurch ist es möglich, dass sowohl an der Tragrolle als auch an der Gegenrolle jeweils die Führungsschiene einfassende Ringflansche angeordnet sind, und der Schlitten insgesamt nicht von der Führungsschiene herabfallen kann. Dadurch kann der Schlitten über die Tragrollen und/oder die Gegenrollen auch Kräfte in Y-Richtung aufnehmen.

Zweckmäßigerweise weist der Schlitten zwei Tragrollen auf, die vertikal von oben auf der Schmalseite der Führungsschiene aufliegen. Zweckmäßigerweise ist bei einer Gegenrolle diese so angeordnet, dass sie mit den beiden Tragrollen ein gleichschenkliges Dreieck aufspannt, und damit in etwa mittig zwischen den beiden Tragrollen an der unteren Schmalseite anliegt.

Die Auswahl der Führungsschiene als langgestrecktes rechteckiges Profilteil, vorzugsweise aus Stahl oder eloxiertem Aluminium, lässt sich leicht beschaffen und/oder ersetzen, da solche Teile als Standardbandmaße im Markt gut verfügbar sind.

Die Führungsschiene ist zweckmäßigerweise an eine seitliche Außenwand des Unterbaus über Verbindungsmittel angeschlossen, wobei die Verbindungsmittel die Breitseite der Führungsschiene durchsetzen. Als Verbindungsmittel kommen beispielsweise Schrauben oder Nieten in Betracht, die zweckmäßig durch eine Distanzhülse geführt sind, um die Führungsschiene möglichst im konstanten Abstand von der Außenwand des Unterbaus anzuschließen. Es versteht sich, dass die Außenwand des Unterbaus hierbei möglichst in einer Ebene liegen soll. Weist der Unterbau Einkerbungen oder Vorsprünge oder Rücksprünge auf, sind die Distanzhülsen entsprechend zu dimensionieren, so dass die beiderseits des Unterbaus angeschlossenen Führungsschienen in parallelen Ebenen liegen. Da die Hersteller um das Ausbeulen von Containern bei großem Gewicht oder heißer Ladung wissen, weisen die Seitenwände schon mal eine konkave Ausgangskontur auf, der die Führungsschiene dann zu folgen hat. Dadurch, dass die Schmalseite der Führungsschiene nach oben gerichtet ist, kann die Führungsschiene eng an die Außenseite des Unterbaus gerückt werden, wobei die Führungsschiene außerhalb der Distanzhülsen und Verbindungsmittel einen Abstand zu dem Unterbau einhält, der es zulässt, dass die an dem Schlitten angeordneten Tragrollen und Gegenrollen die Breitseiten der Führungsschiene umgreifen. Zweckmäßigerweise durchsetzen die Verbindungsmittel die Breitseite der Führungsschiene daher mittig, um nicht als Hindernis für die Tragrollen und Gegenrollen im Weg zu stehen.

Zweckmäßigerweise ist zwischen der Führungsschiene und der Außenwand des Unterbaus ein Spalt vorgesehen, so dass zwischen die Führungsschiene und die Außenwand des Unterbaus fallende Verunreinigungen herabfallen können, beispielsweise zwischen zwei Verbindungsmitteln für den Anschluss der Führungsschiene. Um das Herabfallen von Teilen, die auf der Schmalseite der Führungsschiene zum Liegen kommen könnten, durch diesen Spalt zu ermöglichen, ist der Abstand der Führungsschiene von der Außenwand des Unterbaus nicht kleiner als die Erstreckung von der Schmalseite der Führungsschiene. Zweckmäßigerweise ist der Abstand der Führungsschiene von der Außenwand des Unterbaus gleich der Erstreckung der Schmalseite der Führungsschiene, beispielsweise jeweils 8 mm.

Zweckmäßigerweise ist die Dicke der Tragrolle oder die Dicke der Gegenrolle schmaler als die zweifache Erstreckung der Schmalseite der Führungsschiene. Hierdurch ist sichergestellt, dass die Tragrollen und Gegenrollen an der Außenwand des Unterbaus vorbei rollen können, ohne an der Außenwand des Unterbaus hängen zu bleiben. Da tatsächlich nur ein Ringflansch der Tragrolle bzw. der Gegenrolle in Richtung auf die Außenwand des Unterbaus über die Führungsschiene vorsteht, ist die Dicke der entsprechenden Rolle in der Regel deutlich kleiner als der Abstand der gegenüberliegenden Breitseiten der Führungsschiene, bei einer Führungsschiene von 8 mm Breite und 40 mm Höhe nicht größer als 2 - 3 mm Dicke des Ringflanschs.

Gemäß einer bevorzugten Ausgestaltung ist vorgesehen, dass die Höhe der Führungsschiene, also deren Breitseite, die vertikal angeordnet ist, größer ist als die Höhe der Tragrolle und/oder der Gegenrolle. Die Tragrolle und/oder die Gegenrolle sind jeweils geringfügig kleiner ausgebildet als die Höhe der Führungsschiene.

Gemäß einer besonders bevorzugten Ausgestaltung ist die Führungsschiene aus mehreren hintereinander angeordneten Schienenabschnitten gebildet, die jeweils an der Außenwand des Unterbaus angeschlossen sind. Dies hat den Vorteil, dass im Falle einer Beschädigung nicht die gesamte Schiene von dem Unterbau abgelöst, repariert oder ausgetauscht und wieder befestigt werden muss, sondern nur der beschädigte Bereich instand gesetzt werden muss. Ferner passt sich eine in Abschnitten gebildete Führungsschiene auch besser an Deformationen des Unterbaus, beispielsweise eines Containers, dessen Dimensionen sich mit Füllung oder Temperatur der Füllung verändern können, an. Schließlich ermöglicht das Ausgestalten der Führungsschiene in einzelne Teilsegmente auch den Austausch eines Schlittens, indem ein Segment, an dem der Schlitten angeordnet ist, abgelöst wird und dann von dem Schlitten abgezogen wird, der dann repariert oder ausgetauscht werden kann. Es ist nicht länger erforderlich, den gesamten Planenaufbau zu demontieren, die Plane von dem Verdeckgestell abzunehmen oder aber mehrere Teile des Verdeckgestells abzubauen.

Das Material, aus dem die Führungsschiene hergestellt ist, ist zweckmäßigerweise ausgewählt aus der Gruppe umfassend Stahl und eloxiertes Aluminium. Zahlreiche Container sind aus Aluminium hergestellt, so dass sich eine Führungsschiene aus Aluminium gut an die Eigenschaften des Containers anpasst. Stahl ist kostengünstig und kann einfach verarbeitet werden. Wenn das Aluminium eloxiert ist, weist es dieselbe Oberflächenhärte auf wie Stahl, sodass die Rollen aus Stahl die Führungsschiene nicht zu beschädigen vermögen.

Eine besonders wichtige Anforderung bei einem Planenaufbau besteht darin, dass der Planenaufbau seitlich nicht wesentlich über die Breite des Unterbaus ragen darf. Daher ist zweckmäßig vorgesehen, dass die Außenseite der Führungsschiene weniger als 25 mm, vorzugsweise weniger als 20 mm, und möglichst ca. 15 mm von der Außenseite des Unterbaus beabstandet ist.

Hierbei ist weiter zweckmäßig, wenn der Abstand einer Außenseite des Schlittens zu der Außenseite der Führungsschiene geringer ist als der Abstand der Außenseite der Führungsschiene von einer Außenseite des Unterbaus. Hierdurch wird vorteilhaft ein schmalbauender Planenaufbau geschaffen, der trotzdem stabil an der Führungsschiene geführt ist.

Gemäß einem Aspekt ist ein Planenaufbau für einen Unterbau, wie einen Lastkraftwagen, Anhänger, Auflieger, Bahnwaggon, Muldenkipper oder Container, geschaffen, umfassend ein Verdeckgestell und eine Plane aus wetterbeständigem Material, wobei das Verdeckgestell eine Mehrzahl von Holmen aufweist, die endseitig jeweils einen Schlitten aufweisen, der entlang einer Führung verlagerbar ist. Hierbei ist an jedem Paar gegenüberliegender Schlitten zumindest ein Bügel schwenkbar angeschlossen, der mit einem Bügel eines benachbarten Schlittenpaares eine Planenfalthilfe bildet, wobei die Bügel der Planenfalthilfe miteinander verbunden sind. An dem vordersten Schlittenpaar ist - nach vorne weisend - schwenkbar ein Abdeckbügel angeschlossen, wobei der Abdeckbügel bei Verschieben des vordersten Schlittenpaares über eine Anlaufschräge der Führung von einer abgesenkten Schließposition in eine teilweise angehobene Verfahrposition verschwenkbar ist. In der abgesenkten Schließposition ist der Abdeckbügel nahezu horizontal angeordnet, während der Abdeckbügel in der Verfahrposition einen Winkel zwischen 20° und 45°, zweckmäßigerweise um die 30°, einnimmt.

Dadurch, dass der Abdeckbügel in der Verfahrposition noch nicht vollständig geöffnet ist, steift dieser das vorderste Schlittenpaar in Y-Richtung aus, insbesondere dann, wenn der Abdeckbügel selbst auch entlang der Führung geführt ist. Die Aussteifung durch den Abdeckbügel bewirkt, dass die einseitig in das vorderste Schlittenpaar eingeleitete Zugkraft ohne Verkanten des Holmes, der die vordersten Schlitten verbindet, in das Schlittenpaar eingeleitet wird, wodurch trotz der leichtgewichtigen Struktur des Verdeckgestells der Abdeckbügel mit dem vordersten Schlittenpaar ein stabiles Endteil bildet.

Vorzugsweise wird der Abdeckbügel nahe der vollständig geöffneten Position von der teilweise angehobenen Verfahrposition in eine aufrechte Öffnungsposition verschwenkt. Hierzu ist an dem Abdeckbügel zweckmäßig ein beispielsweise als Doppelwinkel ausgebildeter Steuerhebel vorgesehen, der mit einem Gegenanschlag, der als Fläche, Zapfen oder Rolle ausgeführt sein kann, nahe dem Endbereich der Führung zusammengreift, so dass bei weiterem Verlagern des vordersten Schlittenpaares ein Schwenkmoment in den Abdeckbügel eingeleitet wird, das diesen aus der Verfahrposition in eine aufrechte, das heißt um ca. 90° gegen die Horizontale aufgeschwenkte Öffnungsposition verschwenkt. Hierdurch ist vorteilhaft sichergestellt, dass der Abdeckbügel erst dann, wenn die Verlagerungsbewegung des vordersten Schlittenpaares abgeschlossen ist, seine vorteilhaft aussteifende Verfahrposition verlässt und in eine Position verlagert wird, in der er in eine zu den anderen Bügeln und Holmen im Wesentlichen parallele Ebene gelangt, wodurch die Beladeöffnung des Unterbaus vollständig freigegeben wird. Sobald der Planenaufbau von der geöffneten Position wieder in Schließrichtung bewegt wird, sinkt der Abdeckbügel entsprechend wieder ab, so dass der Abdeckbügel über praktisch die gesamte Fahrstrecke des vordersten Schlittenpaares in der Verfahrposition angeordnet ist.

Zweckmäßigerweise weist der Abdeckbügel zumindest eine Tragrolle auf, die entlang der Führung verlagerbar ist. Hierbei liegt die Tragrolle zweckmäßig von oben auf einer Schmalseite einer vorzugsweise im Querschnitt rechteckigen Führungsschiene auf, wobei die Tragrolle beiderseits einer an der Schmalseite der Führungsschiene anliegenden Umfangsfläche einen Ringflansch bzw. einen Flansch aufweist, der radial über den Durchmesser der Umfangsfläche vorsteht, so dass die einander zugekehrten Stirnseiten der beiden Ringflansche die Breitseite der Führungsschiene teilweise einfassen. Hierdurch ist der Abdeckbügel entlang der Führungsschiene in X-Richtung und Y-Richtung geführt und, solange er auf der Führungsschiene abgesenkt ist, stabilisiert die an beiden Seiten des Abdeckbügels vorgesehene Tragrolle den Abdeckbügel dadurch, dass eine Verlagerung des Abdeckbügels in eine Richtung quer zu der Erstreckung der Führung verhindert ist. Der Umstand, dass die Tragrolle des Abdeckbügels sich an der Führung abstützt, führt weiter dazu, dass eine zusätzliche Versteifung des Systems, bestehend aus dem vorderstem Schlittenpaar mit seinem Tragrollen und Gegenrollen einerseits und der beiden Tragrollen des Abdeckbügels andererseits erreicht wird, wobei der Abstand der Tragrolle des Abdeckbügels zu den Tragrollen und Gegenrollen des vordersten Schlittenpaares durch den Abdeckbügel konstant ist. Hierdurch ergibt sich eine Art Vierpunktschlitten bzw. Doppelachsschlitten, der das Antriebssystem mit den vordersten Schlitten zusätzlich versteift. Insbesondere dann, wenn die Zugkraft einseitig in einem der beiden vordersten Schlitten eingeleitet wird, nimmt die diagonal gegenüberliegende Tragrolle auch ein durch ein um die vertikale Achse durch den angetriebenen Schlitten entstehendes Schwenkmoment auf und wird so gegen die Führungsschiene gedrückt.

Zweckmäßigerweise weist der Abdeckbügel zumindest eine zu der Tragrolle senkrecht angeordnete Führungsrolle auf, die in der Verfahrposition des Abdeckbügels ein Ausrücken gegen die Außenwand des Unterbaus verhindert. Die Führungsrolle liegt in der Verfahrposition des Abdeckbügels in einer horizontalen Ebene und dreht sich um eine vertikale Achse, wobei der Umfang der Führungsrolle so angeordnet ist, dass diese sich umfangsmäßig gegen die Außenwand des Unterbaus oder aber die äußere Breitseite der Führungsschiene abstützen kann, aber nicht muss. Hierbei steht die Führungsrolle zweckmäßigerweise nicht permanent in Kontakt mit ihrem Gegenpart, sondern dient als Reserveabstützung in horizontaler Richtung quer zur Verfahrrichtung (Y-Richtung), wenn der Ringflansch der Tragrolle beispielsweise nicht ausreicht, um den Abstand des Schlittens von dem Unterbau alleine sicherzustellen. Dies ist beispielsweise dann der Fall, wenn durch Deformation oder Verunreinigung der Führungsschiene die Tragrolle entgleist, das Abdeckelement durch ein Hindernis im Inneren des Unterbaus angehoben werden muss, der Unterbau sich verformt oder dergleichen. In diesem Fall stellt die Führungsrolle sicher, dass der Abdeckbügel nicht gegen den Unterbau anschlägt. Da die Führungsrolle keine vertikalen Lasten aufnehmen muss, kann diese kleiner als die Tragrolle des Abdeckbügels ausgebildet sein, und weist zweckmäßigerweise einen Kunststoffring auf, der Quietschgeräusche verhindert. Hierbei ist zu beachten, dass während des Verschwenkens von der geschlossenen Position des Abdeckbügels in die Verfahrposition und während des Verschwenkens von der Verfahrposition in die geöffnete Position des Abdeckbügels die Führungsrolle auch in einer Weise verlagert wird, in der sie nicht ohne Weiteres abrollen kann, sodass durch die gewählte Ausführung mit Kunststoffumfang der Reibungswiderstand im Falle einer Berührung herabgesetzt ist und überdies Kratzgeräusche und -spuren vermieden werden.

Gemäß einer bevorzugten Weiterbildung ist vorgesehen, dass die Führungsrolle weiter von einer Anlenkung des Abdeckbügels beabstandet ist als die Tragrolle. Hierdurch wird vorteilhaft erreicht, dass durch die Deformation des Abdeckbügels, die in einem bestimmten Umfang als federndes Nachgeben auch erwünscht ist, in erster Linie die Tragrolle in horizontaler Querrichtung zur Führung verlagert wird, und aufgrund des größeren Abstands von der Anlenkung die Führungsrolle nur sekundär diese Bewegungen aufnehmen muss.

Vorzugsweise weist der Abdeckbügel zumindest eine zu der Tragrolle in einem Winkel von weniger als 90° angeordnete Schwenkrolle auf, die bei der Schwenkbewegung des Abdeckbügels, also von der geschlossenen Position des Abdeckbügels in die Verfahrposition bzw. von der Verfahrposition in die geöffnete Position und umgekehrt, den Abdeckbügel abstützt. Während die Führungsrolle bei der Verlagerung entlang der Führung durch ihre horizontale Anordnung im Falle des Einsatzes mit der Außenwand des Unterbaus oder der Führungsschiene ohne großen Widerstand unterstützt, befindet sich die Führungsrolle bei den ausgeführten Schwenkbewegungen des Abdeckbügels aufgrund ihrer Orientierung eher in einer hindernden oder bremsenden Position. Beim Aufschwenken des Abdeckbügels von der Verfahrposition in die geöffnete Position ist überdies über einen großen Teil des Schwenkwegs kein Teil des Unterbaus mehr da, gegen den die Führungsrolle eine Abstützung in Y-Richtung vornehmen könnte. Daher ist die Schwenkrolle so angeordnet, dass diese sich gegen Teile des Unterbaus oder hieran befestigte Teile derart abstützen kann, dass bei der Verschwenkung des Abdeckbügels ein Ausrücken des Abdeckbügels gegen den Unterbau verhindert wird. Hierbei ist beachtlich, dass insbesondere beim Verschwenken von der Verfahrposition in die geöffnete Position des Abdeckbügels die Tragrolle des Abdeckbügels außer Eingriff mit der Führungsschiene gelangt, sodass die Tragrolle das Ausrücken des Abdeckbügels gegen den Unterbau nicht mehr verhindern kann. Auch muss verhindert werden, dass trotz des geringen Abstands von der Tragrolle zu dem Unterbau diese miteinander kollidieren oder aneinander reiben.

Zweckmäßigerweise verläuft die Lagerung der Schwenkrolle senkrecht zu einer Schwenkachse des Abdeckbügels. Hierdurch ist die Schwenkrolle annähernd tangential auf dem Schwenkkreis, den der Schwenkbügel ausführt, angeordnet, wodurch jedenfalls eine Komponente der Schwenkbewegung durch das Abrollen der Schwenkrolle unterstützt wird.

Zweckmäßigerweise ist die Tragrolle weiter von einer Anlenkung des Abdeckbügels beabstandet als die Schwenkrolle, sodass die Abstützung des Abdeckbügels während der Schwenkbewegung vielmehr von der Schwenkrolle übernommen wird, und verhindert wird, dass trotz vorgesehener Schwenkrolle die Tragrolle mit dem Unterbau oder hieran angeschlossenen festen Teilen kollidiert.

Beim Verschwenken des Abdeckbügels von der Verfahrposition in die geöffnete Position führt die Schwenkrolle den Abdeckbügel, bei der Verlagerungsbewegung zwischen Verfahrposition und geschlossener Position ergänzt sie zumindest die Tragrolle. Hierdurch kann der Abdeckbügel mit weniger Gewicht ausgebildet werden, sodass das Anheben des Abdeckbügels von der Verfahrposition in die geöffnete Position erleichtert wird.

Es ist möglich, die Funktion der Führungsrolle und der Schwenkrolle dadurch in einem Bauteil zu vereinigen, dass eine Kugel in einer Kugelpfanne an dem Abdeckbügel gelagert ist.

Zweckmäßigerweise sind die Rollen, also die Tragrolle, die Führungsrolle und/oder die Schwenkrolle an einer an dem Abdeckbügel abstehenden Platte angeordnet, wobei eine solche Platte beiderseits Seite zum Zusammenwirken mit der Führung vorgesehen ist. Durch das Anordnen an einer Platte, die zweckmäßigerweise den Abdeckbügel im Bereich seiner Schenkel in Schwenkrichtung nach unten verlängert, und die zweckmäßigerweise jeweils an einen massiven Hebelarm angeschlossen ist, wird vorteilhaft erreicht, dass einer vollständigen Öffnung des Abdeckbügels keine Teile im Wege stehen. Zweckmäßigerweise nehmen die Lagerachsen der Rollen jeweils einen Winkel zueinander ein, wodurch die Rollen insgesamt alle Bewegungen des Abdeckbügels günstig abstützen können.

Gemäß einem Aspekt ist ein Planenaufbau für einen Unterbau, wie einen Lastkraftwagen, Anhänger, Auflieger, Bahnwaggon, Muldenkipper oder Container, geschaffen, umfassend ein Verdeckgestell und eine Plane aus wetterbeständigem Material, wobei das Verdeckgestell eine Mehrzahl von Holmen aufweist, die endseitig jeweils einen Schlitten aufweisen, der entlang einer Führung verlagerbar ist, wobei an jedem Paar gegenüberliegender Schlitten zumindest ein Bügel schwenkbar angeschlossen ist, der mit einem Bügel eines benachbarten Schlittenpaars eine Planenfalthilfe bildet, wobei die Bügel der Planenfalthilfe miteinander verbunden sind, wobei an dem vordersten Schlittenpaar ein Abdeckbügel schwenkbar angeschlossen ist, und wobei der Abdeckbügel während einer Schwenkbewegung durch eine Schwenkrolle abgestützt ist, deren Achse in etwa senkrecht zu der Schwenkachse angeordnet ist.

Gemäß einem Aspekt ist ein Planenaufbau für einen Unterbau, wie einen Lastkraftwagen, Anhänger, Auflieger, Bahnwaggon, Muldenkipper oder Container, geschaffen, umfassend ein Verdeckgestell und eine Plane aus wetterbeständigem Material, wobei das Verdeckgestell eine Mehrzahl von Holmen aufweist, die endseitig jeweils einen Schlitten aufweisen, der entlang einer Führung verlagerbar ist, wobei an jedem Paar gegenüberliegender Schlitten zumindest ein Bügel schwenkbar angeschlossen ist, der mit einem Bügel eines benachbarten Schlittenpaares eine Planenfalthilfe bildet, wobei die Bügel der Planenfalthilfe miteinander verbunden sind. Hierbei ist an den gegenüberliegenden vordersten Schlitten jeweils eine Gleiteinheit schwenkbar angeschlossen, die über einen Abdeckbügel miteinander verbunden sind, wobei die Gleiteinheit jeweils eine Rolle aufweist, die den Abdeckbügel beim Verlagern entlang der Führung zentriert. Hierdurch wird vorteilhaft erreicht, dass durch den Abdeckbügel miteinander verbundene Gleiteinheiten in einem konstanten Abstand, nämlich dem Anlenkungsabstand der Gleiteinheit an den vordersten Schlitten, dem über den Holm miteinander verbundenen vordersten Schlittenpaar nachlaufen. Sowohl das vordere Schlittenpaar als auch das Paar Gleiteinheiten ist über Tragrollen an die Führung angeschlossen, sodass sich eine Art Doppelachsgestell ergibt, das ein Rechteck im Raum bildet, das durch die Schlitten bzw. die Gleiteinheit und genauer deren Rollen definiert ist, das eine in den vordersten Schlitten eingeleitete Kraft in einem wirksamen Vortrieb umsetzt Denn neben der in Richtung der Führungsschiene eingeleiteten Zugkraft wirkt auch um den Anschluss der Tragrollen des angetriebenen vordersten Schlittens ein Schwenkmoment um eine vertikale Achse, das durch den steifen, aber zumindest federnd in Position vorgespannten Abdeckbügel einen Impuls in die von dem angetriebenen vordersten Schlitten diagonal beabstandete Gleiteinheit einleitet, die damit über ihre Tragrolle die Bewegung in Verlagerungsrichtung unterstützt. Wird der Planenaufbau geschlossen, dreht das Moment durch das Ziehen des vordersten Rollenwagens in die entgegengesetzte Richtung, und der Impuls wird auf die dem vordersten Schlitten vorauseilende Gleiteinheit übertragen.

Zweckmäßigerweise beträgt der Abstand der Tragrolle der Gleiteinheit von dem benachbarten vordersten Schlitten zwischen 5 % und 25 %, vorzugsweise zwischen 7 % und 15 %, besonders bevorzugt zwischen 8 % und 12 % und optimaler Weise etwa 10 % des Abstands der gegenüberliegenden Führungen. In den angegebenen Bereichen wird eine besonders günstige Aussteifung der Doppelachsanordnung erreicht.

Vorzugsweise weist der Abdeckbügel eine große Masse auf, die die Gleiteinheit gegen die Führung drückt. Um zu vermeiden, dass der Abdeckbügel springt, muss dieser eine ausreichend hohe Last in die Tragrolle der Gleiteinheit einleiten. Hierdurch wird verhindert, dass bei ungünstiger Krafteinleitung in den vordersten Schlitten das auf den Abdeckbügeln und die beiden Gleiteinheiten übertragene Moment dazu führt, dass eine der Gleiteinheiten angehoben wird und damit der Abdeckbügel verkantet, zumindest aber ein Abrollen der Tragrollen entlang der Führungsschiene nicht mehr mit minimaler Reibung gewährleistet ist.

Die Gleiteinheit weist wenigstens eine als Tragrolle ausgebildete Rolle auf, die mit einer Umfangsfläche auf einer oberen Schmalseite einer im Querschnitt rechteckigen Schiene der Führung abrollt. Hierdurch erfolgt eine zuverlässige Abstützung des Abdeckbügels gegen die Führung. Die Tragrolle weist hierzu zweckmäßigerweise beiderseits der Umfangsfläche jeweils einen Ringflansch auf, wobei die über den Durchmesser der Umfangsfläche vorstehenden, einander zugekehrten Stirnseiten der beiden Ringflansche eine Breitseite der Führungsschiene teilweise einfasst. Hierdurch ist gewährleistet, dass die Tragrolle auch in einer horizontalen Querrichtung zu der Verlagerungsrichtung mit der Führungsschiene gekoppelt ist, sodass die Tragrolle auch in dieser Querrichtung wirkende Kräfte aufnimmt. Ferner kann die Gleiteinheit eine Führungsrolle aufweisen, die den Abdeckbügel zumindest in der geschlossenen Position und in der Verfahrposition von außen gegen den Unterbau oder hieran befestigte Teile abstützen kann.

Die Führungsrollen gegenüberliegender Gleiteinheiten weisen vorzugsweise einen größeren Abstand als die gegenüberliegenden Tragrollen der Gleiteinheiten auf, sodass sie im Wesentlichen dann zum Einsatz kommen, wenn entweder eine Kraft die Abdeckbügel einseitig in Richtung auf den Unterbau deformiert oder wenn der Unterbau deformiert ist. Auch wenn die Tragrollen entgegen der sie nach unten drückenden Gewichtslast des Abdeckbügels aus der Schiene angehoben werden, vermeiden die Führungsrollen eine Kollision des Abdeckbügels mit dem Unterbau oder ein Schleifen des Abdeckbügels an dem Unterbau.

Zweckmäßigerweise weist jeder der beiden vordersten Schlitten zumindest eine obere Tragrolle und zumindest eine untere Gegenrolle auf, deren Achsen parallel zu den Achsen der Tragrolle der Gleiteinheit verlaufen.

Gemäß einer bevorzugten Weiterbildung weist der Abdeckbügel Spannmittel auf, die die Gleiteinheit in Richtung auf den Unterbau vorspannen. Da der Abdeckbügel trotz seiner Masse Gefahr läuft, um die Anlenkung an dem vordersten Schlittenpaar unabsichtlich heraufgeschwenkt zu werden, stellen die Spannmittel sicher, dass der Abdeckbügel bzw. dessen Tragrollen in die Spur der Führung gedrückt wird. Die Spannmittel können insbesondere die beiden Schenkel des Abdeckbügels miteinander verspannen, sodass diese in beide Richtungen auf den Unterbau vorgespannt sind, wobei die Führungsrolle verhindert, dass es zu einer Kollision kommt. Die Belastung der Schenkel des Abdeckbügels aufeinander zu wird dann durch die Tragrollen und deren Ringflansche auf die Schiene übertragen. Überdies verhindert dies, dass der Abdeckbügel sich aufspreizt und damit beide Tragrollen aus der Schiene gelangen, und der Abdeckbügel sich an dem Unterbau verkeilt. Alternativ oder kumulativ ist vorteilhaft vorgesehen, dass die Spannmittel an einem gebogenen Bügelabschnitt des Abdeckbügels angeordnet sind, beispielsweise als die beiden Schenkel des gebogenen Abschnitts des Abdeckbügels aussteifende diagonale Laschen. Auch hierdurch wird, wenn dies an beiden gebogenen Bügelabschnitten vorgesehen ist, der Bügel in Richtung auf den Unterbau ein Stück weit vorgespannt und einem Aufspreizen entgegengewirkt.

Zweckmäßigerweise weist die Gleiteinheit eine an dem Abdeckbügel angeschlossene Platte auf, an der auch die Rollen angeordnet sind, wodurch ein hoher Grad an Vormontage möglich ist.

Gemäß einem Aspekt ist ein Planenaufbau für einen Unterbau, wie einen Lastkraftwagen, Anhänger, Auflieger, Bahnwaggon, Muldenkipper oder Container, geschaffen, umfassend ein Verdeckgestell und eine Plane aus wetterbeständigem Material, wobei das Verdeckgestell eine Mehrzahl von Holmen aufweist, die endseitig jeweils einen Schlitten aufweisen, der entlang einer Führung verlagerbar ist, wobei an jedem Paar gegenüberliegender Schlitten zumindest ein Bügel schwenkbar angeschlossen ist, der mit einem Bügel eines benachbarten Schlittenpaares eine Planenfalthilfe bildet, wobei die Bügel der Planenfalthilfe miteinander verbunden sind. Hierbei ist der an dem Paar vorderster Schlitten angeschlossene Bügel an den beiden vordersten Schlitten schwenkbar, so dass der Bügel als relativ steifes Teil die Schwenkbewegung von der einen Seite, in die eine Kraft zum Öffnen eingeleitet werden kann, auf die gegenüberliegende Seite überträgt. Im Zusammenwirken mit dem Holm, der die beiden vordersten Schlitten quer zu der Erstreckung der Führung miteinander verbindet, verhindert der Bügel ein Verkanten der vordersten Schlitten gegenüber der Führung, sodass eine in den einen vordersten Schlitten eingeleitete Zugkraft über den Holm und über den Schlitten in den gegenüberliegenden vordersten Schlitten übertragen wird. Hierdurch ist vorteilhaft sichergestellt, dass der Geradeauslauf der Schlitten in dem Verdeckgestell besonders günstig ist.

Vorzugsweise überträgt der an dem Paar vorderster Schlitten angeschlossene Bügel über den mit diesem verbundenen Bügel des benachbarten Paars Schlitten eine Kraft in Richtung der Führung, sodass eine in einen der vordersten Schlitten eingeleitete Zugkraft in Führungsrichtung auf den benachbarten Schlitten übertragen wird. Hierdurch können die weiteren Schlitten des Verdeckgestells bei einer Zugkrafteinleitung in nur einen der vordersten Schlitten bereits bewegt werden, ohne dass die Schlitten stoßbündig aneinander liegen, indem nämlich die Zugkraft in Richtung der Führung über die zu diesem Zweck vorzugsweise flach angeordneten Bügel, deren Komponente in Verlagerungsrichtung damit stärker übertragen wird als in die Vertikale zum Anheben der Plane, übertragen wird. Sobald eines der Bügelpaare sich zum Anheben der Plane faltet, nimmt die Übertragung der Kraft in Richtung der Führung ab, und in dem entsprechenden Bereich wird zunächst die Plane gefaltet, und dann muss die in dem Schlitten wirksame Kraft durch Schieben des benachbarten Schlittens übertragen werden. Da dann aber die Achsen der benachbarten Schlitten bereits relativ nah beieinander sind, kann ein Verkanten eher eintreten, als wenn diese durch die benachbarten Bügel zu einem in der Draufsicht großen Rechteck aufgespannt sind.

Zweckmäßigerweise überträgt der an dem Paar vorderster Schlitten angeschlossene Bügel über den mit diesem verbundenen Bügel des benachbarten Paares Schlitten auch eine Kraft zum Anheben der Plane, das heißt in die vertikale Richtung. Durch das flache Anordnen der Bügel ist diese zumindest bei dem vordersten Bügelpaar deutlich geringer als die Kraftübertragung in Richtung der Führung.

Es ist zweckmäßig möglich, dass der an dem Paar vorderster Schlitten angeschlossene Bügel über den mit diesem verbundenen Bügel des benachbarten Paares Schlitten in eine Richtung entgegen dem Anheben der Plane belastet ist, um eine möglichst lange Krafteinleitung in Richtung der Führung zu gewährleisten. Insbesondere kann diese Belastung dadurch erfolgen, dass der Anstellwinkel der Bügel geringer ist als bei den anderen Bügelpaaren, beispielsweise indem ein längerer Bügel eingesetzt wird, ober aber die Masse der Bügel erhöht ist, beispielsweise indem ein schwereres Material eingesetzt wird. Auch kann die Vorspannung der Schenkel der Bügel zueinander bei den Bügelpaaren unterschiedlich ausgebildet sein, sodass durch die unterschiedliche Verspannung der Bügelpaare die Belastung entgegen der Aufstellrichtung der Plane verschieden ist. Schließlich kann auch eine Expander oder eine Feder eine solche entgegen der Aufstellrichtung wirkende Kraft vorsehen.

Besonders vorteilhaft ist eine Ausgestaltung, bei der die miteinander verbundenen Bügel in eine zur Richtung der Führung senkrechte horizontale Richtung miteinander auf eine eine Relativverschiebung verhindernde Weise gekoppelt sind, das heißt insbesondere kann die Basis des U-förmigen Bügels nicht in Richtung der Erstreckung der Basis gegenüber der Basis des anderen Bügels verschoben werden. Hierdurch sind die beiden Bügel in diese Y-Richtung gekoppelt, sodass in dieser Richtung die Bügel trotz ihrer schwenkbeweglichen Koppelung in Richtung der Führung wie eine starre Einheit wirken. Hierdurch wird vorteilhaft eine um eine vertikale Achse in dem gezogenen vordersten Schlitten eingeleitete Kraft derart in den benachbarten Schlitten derselben Führungsschiene eingeleitet, dass dieser in Richtung auf den Unterbau verschoben wird und damit den gegenüberliegenden benachbarten Schlitten mitnimmt. Es ergibt sich hierdurch eine Aussteifung der beiden benachbarten Schlittenpaare nach Art einer Doppelachsführung, die eine besonders günstige Übertragung der in Richtung der Führung wirkenden Kräfte auf die nachfolgenden Schlittenpaare und Bügel ermöglicht.

Zweckmäßigerweise sind die Schlitten nur über zumindest eine obere Tragrolle und zumindest eine untere Gegenrolle an die Führung angeschlossen, sodass sowohl die Aufnahme von Kräften in Richtung der Führung als auch in der horizontalen Richtung senkrecht hierzu, also quer zu dem Unterbau, durch die Tragrollen erfolgt. Damit die Schlitten mit den Tragrollen der Führung folgen können, auch wenn die Führungsschienen nicht ganz zueinander parallel sind, können die U-förmig ausgeführten Holme und Bügel aufspreizen, wodurch ein Verkanten vorteilhaft vermieden wird.

Gemäß einer ersten bevorzugten Ausgestaltung ist vorgesehen, dass die miteinander verbundenen Bügel derart miteinander verbunden sind, dass durch den an den vordersten Schlitten angeschlossenen Bügel der verbundene Bügel einen der diesem zugehörigen Schlitten in Richtung auf den Unterbau drückt. Hierzu übertragen die beiden Bügel gemeinsam das an dem gezogenen vordersten Schlitten durch das Ziehen wirksam werdende Moment auf einen der Schlitten des benachbarten Schlittenpaares, wobei beim Ziehen in Öffnungsrichtung der an derselben Führung vorgesehene Schlitten in Richtung auf den Unterbau gedrückt wird, während beim Schließen der dem angetriebenem vordersten Schlitten diagonal gegenüberliegende Schlitten in Richtung auf den Unterbau gedrückt wird.

Insbesondere in der Kombination mit der Gleiteinheit, die ebenfalls eine Impulsübertragung bewirkt, bilden der Abdeckbügel mit der Gleiteinheit und den daran befestigten Tragrollen einerseits und das unmittelbar benachbarte Schlittenpaar andererseits eine günstige Übertragung der durch das Drehmoment übertragenen Impulse, wobei insgesamt eine Art Dreiachsschlitten gebildet ist, der besonders günstige Laufeigenschaften aufweist.

Gemäß einer bevorzugten Ausgestaltung ist vorgesehen, dass die beweglichen Teile des Verdeckgestells sich von hinten nach vorne zusammenfalten. Gemäß einer anderen bevorzugten Ausgestaltung ist vorgesehen, dass die beweglichen Teile des Verdeckgestells sich von vorne nach hinten zusammenfalten. Als bewegliche Teile des Verdeckgestells sind im Wesentlichen die Planenfalthilfen anzusehen, während die Holme mit den hieran angeschlossenen Schlitten zusammenrücken. Besonders bevorzugt ist jedoch eine Ausgestaltung, bei der die verbundenen Bügel zwischen dem vordersten Schlittenpaar und dem unmittelbar benachbarten Schlittenpaar sich bei der Verlagerung in Öffnungsrichtung als letzte Planenfalthilfe anheben. Die Reihenfolge, in der sich die weiteren Bügelpaare bzw. Planenfalthilfen anheben, ist dann von untergeordneter Bedeutung, da durch die vorlaufende Achse durch das unmittelbar benachbarte Schlittenpaar einerseits, und durch den Abdeckbügel andererseits eine sehr stabile Laufwagenkonzeption erreicht ist, die eine langlebige und zuverlässige Betätigung des Verdeckgestells ermöglicht.

Die Plane ist vorzugsweise an zumindest einem von Schlitten und Holmen angeschlossen, zweckmäßigerweise sowohl an dem Schlitten als auch an den Holmen, und zwar an der Basis ihrer federnden U-Form. Da die Plane den Unterbau nicht nur überdeckt, sondern das Verdeckgestell auch seitlich begrenzt, ist zweckmäßigerweise auch eine Anbindung im Bereich der Schenkel der U-förmigen Holme vorgesehen, wobei die Anbindung auch im Bereich der Schlitten erfolgen kann.

Die Schlitten sind zweckmäßigerweise so konzipiert, dass der Schlitten eine flache Platte umfasst, und dass die Tragrollen auf derselben Seite der Platte vorstehen, an der auch die Bügel schwenkbar angeschlossen sind. Dadurch wird vorteilhaft vermieden, dass bewegliche Teile mit Ausnahme der Plane seitlich über die Ebene der flachen Platte des Schlittens vorstehen und entsprechend eine sehr kompakte Bauform erreicht.

Zweckmäßigerweise sind die Holme U-förmig ausgeführt, wobei eine Basis des U-förmigen Holmes im geschlossenen Zustand des Planenaufbaus auf derselben Höhe angeordnet ist wie dem Schlitten abgekehrte Bereiche des Bügels. Es ist aber auch möglich, dass die Holme die Schlitten verbinden, ohne eine U-Form anzunehmen, wenn die Holme beispielsweise als Spriegelschaft oder dergleichen realisiert sind.

Die Führung ist zweckmäßigerweise in einem Abstand zu dem Unterbau angeordnet, der größer ist als eine nach oben weisende Schmalseite der Führung, sodass Verunreinigungen, die auf der Schmalseite abgelegt sein sollten, nach beiden Seiten herabfallen können, ohne Brücken zu bilden und damit die Funktionalität des Planenaufbaus zu beschränken.

Zweckmäßigerweise ist das Verdeckgestell in einer horizontalen Querrichtung zu der Verlagerungsrichtung nachgiebig ausgebildet, um Toleranzen oder Deformationen des Unterbaus auszugleichen. Dies wird schon durch die U-förmige Ausgestaltung der Bügel erreicht, aber auch der Abdeckbügel und die Holme müssen entsprechend nachgiebig sein, damit insbesondere Bereiche, in denen der Abstand der beiderseitigen Führungsschienen der Führung nicht konstant ist, durchlaufen werden können. Dem liegt der Gedanke zugrunde, dass anders als bei anderen Planenaufbauten, bei denen ein Längsträger aus Aluminium dem Verdeckgestell folgt, das heißt durch Deformation sich an dessen Maße anpasst, vorliegend das Verdeckgestell sich an die Deformationen des Unterbaus anpassen soll.

Der Planenaufbau zeichnet sich insgesamt dadurch aus, dass die Kraft zum Öffnen oder Schließen einseitig einleitbar ist, wobei die Kraft zum Öffnen oder Schließen zweckmäßig an nur einem der beiden vordersten Schlitten eingeleitet wird. Hierzu ist beispielsweise eine Gurtschlaufe an den vordersten Schlitten angeschlossen, die mit einem Werkzeug oder auch von einem motorisch angetriebenem Teil ergriffen werden kann. Da das Verdeckgestell einen Unterbau überbaut, der auch eine gewisse Höhe aufweist, beispielsweise bei einem auf einem Fahrzeug montierten Muldenkipper, muss der Widerstand des Verdeckgestells gegen die Öffnungskraft gering dimensioniert sein.

Das Verdeckgestell ist zweckmäßig breiter als der Unterbau, sodass er an einer Außenwand des Unterbaus angeschlossen werden kann. Die Teile des Verdeckgestells sind zweckmäßigerweise als Stahlteile ausgeführt, wobei die Führungsschiene alternativ zu einer Ausführung als Stahlteil auch als eloxiertes Aluminiumteil ausgeführt sein kann, das mit beweglichen Stahlteilen gut zusammenwirkt.

Gemäß einem Aspekt ist ein Schwenkwinkelbegrenzer zum Einsatz in einem Planenaufbau geschaffen, der sich dadurch auszeichnet, dass dieser in einem zweiteiligen Werkzeug für Spritzgießen hergestellt ist. Erstmals wird ein Schwenkwinkelbegrenzer angegeben, der umfangsmäßig zwei zylindrische Rohrabschnitte lagert und zugleich durch ein Herstellungsverfahren charakterisiert ist, das nur ein zweiteiliges Werkzeug bzw. eine zweiteilige Form benötigt. Dies wird durch das Verteilen der Lagerschalenhälften in voneinander beabstandeten Abschnitten der Aufnahme für den rohrförmigen Abschnitt erreicht, sodass auf der jeweils gegenüberliegenden Seite des Lagerschalenabschnitts ausreichend Platz ist, das Werkzeug zu entformen.

Gemäß der Erfindung ist ein Schwenkwinkelbegrenzer zum Einsatz in einem Planenaufbau geschaffen, der zwei Aufnahmen zur parallelen Aufnahme von zwei zylindrischen Rohrabschnitten vorsieht, wobei die Aufnahmen jeweils umfangsmäßige Lagerabschnitte aufweisen, wobei in einem der umfangsmäßigen Lagerabschnitte eine schlitzartige Ausnehmung gebildet ist, durch die ein von dem Rohrabschnitt radial vorstehender Stift, Niet oder anderes Teil einsetzbar ist, dessen Schwenkwinkel begrenzt wird. Der Schlitz Ist vorzugsweise so ausgestaltet, dass der Stift eine Bewegung des Rohrabschnitts in Richtung der Aufnahme verhindert, jedoch eine Schwenkbewegung des Rohrabschnitts in der Aufnahme zulässt. Eine vorteilhafte Verwendung des Schwenkwinkelbegrenzers ergibt sich in Planenaufbauten aller Art.

Gemäß einem Aspekt wird ein Profilteil mit rechteckigem Querschnitt als Führungsschiene für einen Planenaufbau verwendet.

Eine vorteilhafte Verwendung des Planenaufbaus ergibt sich als Abdeckung bei einem Container, bei einem Lastkraftwagen, bei einem Bahnwaggon, bei einem Schwimmbad, bei einem Carport, bei einem Gebäude als Dachersatz, oder bei einem Muldenkipper.

Weitere Eigenschaften, Vorteile und Weiterbildungen der Erfindung ergeben sich aus der nachfolgenden Beschreibung eines bevorzugten Ausführungsbeispiels sowie aus den abhängigen Ansprüchen.

Die Erfindung wird nachstehend und unter Bezugnahme auf die anliegenden Zeichnungen anhand eines bevorzugten Ausführungsbeispiels näher erläutert.
- Fig. 1: zeigt eine perspektivische Ansicht auf das Verdeckgestell eines erfindungsgemäßen Planenaufbaus für einen Container im geschlossenen Zustand.
- Fig. 2: zeigt eine Seitenansicht des Verdeckgestells aus Fig. 1 in einer Seitenansicht.
- Fig. 3: zeigt eine perspektivische Ansicht des Verdeckgestells aus Fig. 1 und 2 in teilweise geöffneter Stellung.
- Fig. 4: zeigt eine Seitenansicht des Verdeckgestells aus Fig. 3.
- Fig. 5: zeigt eine perspektivische Ansicht des Verdeckgestells aus Fig. 1 bis 4 in vollständig geöffneter Stellung.
- Fig. 6: zeigt eine Seitenansicht des Verdeckgestells aus Fig. 5.
- Fig. 7: zeigt eine explodierte Ansicht eines Schlittens aus Fig. 1 bis 6.
- Fig. 8: zeigt eine teilweise explodierte Ansicht eines vordersten Schlittens aus Fig. 1 bis 6.
- Fig. 9: zeigt einen Hebelarm mit angeschlossenem Doppelwinkel eines Abdeckbügels aus dem Verdeckgestell der Fig. 1 bis 6.
- Fig. 10: zeigt eine perspektivische Ansicht eines Schwenkwinkelbegrenzers aus dem Verdeckgestell der Fig. 1 bis 6 von unten.
- Fig. 11: zeigt eine Draufsicht auf den Schwenkwinkelbegrenzer aus Fig. 10 von unten.
- Fig. 12: zeigt eine Seitenansicht des Schwenkwinkelbegrenzers aus Fig. 11.
- Fig. 13: zeigt einen Schnitt durch den Schwenkwinkelbegrenzer aus Fig. 11 entlang der Linie XIII-XIII.
- Fig. 14: zeigt einen Schnitt durch den Schwenkwinkelbegrenzer aus Fig. 11 entlang der Linie XIV-XIV.
- Fig. 15: zeigt einen Schnitt durch den Schwenkwinkelbegrenzer aus Fig. 11 entlang der Linie XV-XV.
- Fig. 16: zeigt eine perspektivische Ansicht des Schwenkwinkelbegrenzers der Fig. 10 bis 15 von oben.
- Fig. 17: zeigt einen Schnitt durch den Schwenkwinkelbegrenzers der Fig. 10 bis 16 im eingebauten Zustand.

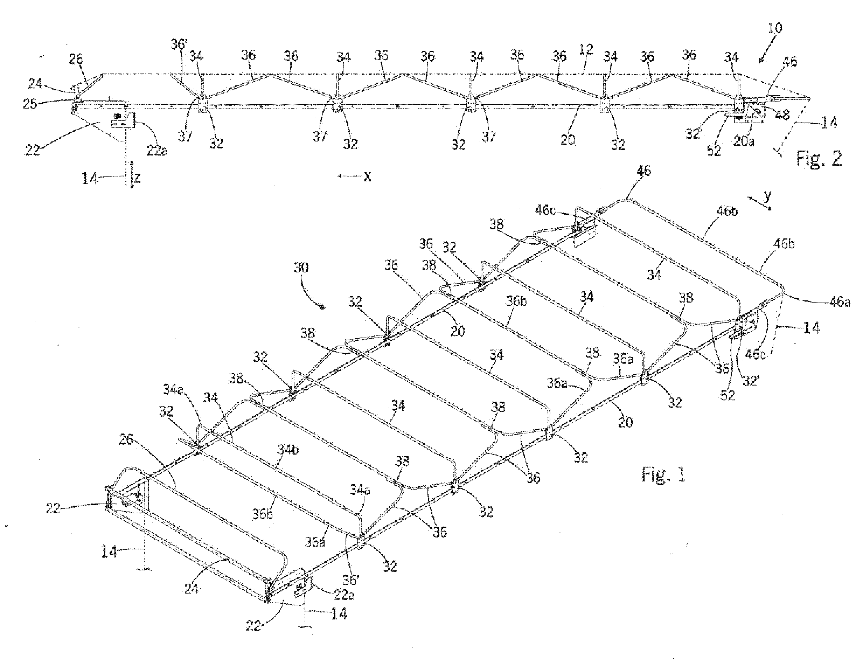

In Fig. 2 ist eine Seitenansicht eines Planenaufbaus 10 dargestellt, bei dem eine strichpunktiert dargestellte Plane 12 angedeutet ist, die zur besseren Darstellbarkeit in den weiteren Figuren nicht dargestellt ist. Ferner ist gestrichelt der Teil einer Silhouette eines Containers 14 angedeutet, der von dem Verdeckgestell 16 überbaut wird. Der Container 14 ist beispielsweise als Schuttmulde ausgebildet, in der Geröll, aber auch staubende Materialen aufgenommen werden können, weshalb die Abdeckung durch den Planenaufbau 10 zweckmäßig, unter Umständen sogar beim Transport auf einem LKW vorgeschrieben ist.

Der Planenaufbau 10 weist beiderseits des Containers 14 an dessen seitlicher Außenwand jeweils eine angeschlossene Führungsschiene 20 auf, die aus einer Mehrzahl von Führungsschienenabschnitten besteht, die in einem Abstand zu der Containeraußenwand an dieser festgelegt sind, beispielsweise durch Niete, Schrauben oder andere geeignete Befestigungsmittel, die einen definierten Abstand zu der Außenwand des Containers 14 ermöglichen. Hierdurch ist die Führungsschiene 20 als durchgehendes Teil, zusammengesetzt aus mehreren Teilstücken, mit einem rechteckigen Profil gebildet, die im eingebauten Zustand Ober- und Unterseite als Schmalseiten und die Breitseiten parallel zur Containerwand aufweist.

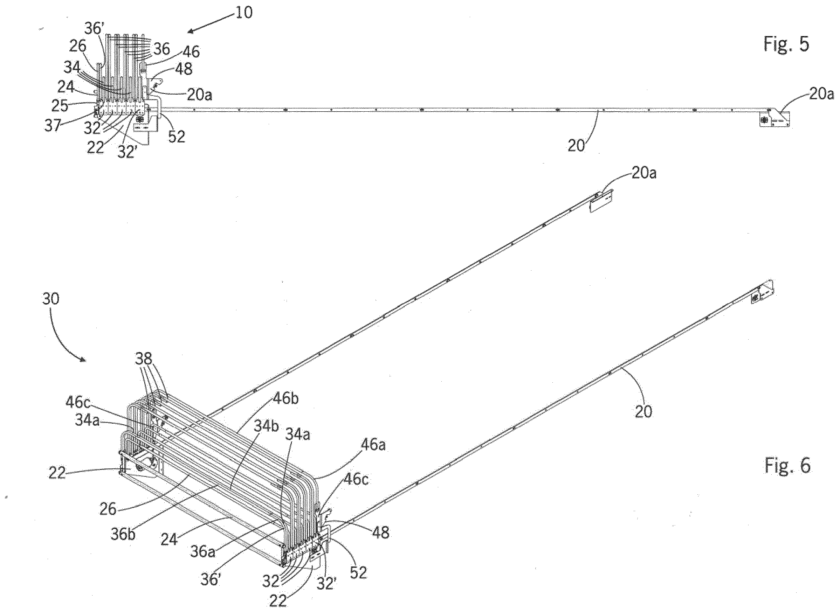

An dem in Öffnungsrichtung hinteren Ende des Verdeckgestells 16, das in Fig. 2 links dargestellt ist, kragt das Verdeckgestell 16 über das Ende des Containers 14 hinaus, wobei in Verlängerung der Außenwand des Containers 14 eine im Wesentlichen dreieckige Konsole oder Platte 22 auf der Rückseite des Containers 14 angeschlossen ist, an der auch die Führungsschiene 20 sich fortsetzt. Zweck des überkragenden Bereichs ist es, im geöffneten Zustand, der insbesondere in Fig. 5 und 6 gut zu erkennen ist, die gesamte Füllöffnung des Containers 14 vollständig freigeben zu können, indem die noch zu beschreibenden beweglichen Teile des Verdeckgestells 16 dorthin verschoben werden können. Insbesondere sollen keine Teile des Planenaufbaus 16 die Befüllung des Containers 14 behindern. Die dreieckige Platte 22 reicht höher als die Ebene der Führungsschiene 20 und verlängert die Außenwand des Containers 14 auch in dieser Höhe nach hinten. In der Praxis werden die Seiten eines Containers häufig gemäß der Richtung, in der er verfahren wird, bezeichnet, wobei die mit einer Schräge angedeutete Seite des Containers 14 meist auf dem Fahrzeug hinten angeordnet ist; vorliegend wird aber der Bereich, in dem die beweglichen Teile des Verdeckgestells 16 sich bei geöffnetem Planenaufbau 10 sammeln, als hinteres Ende bezeichnet, und das vordere Ende ist dasjenige, das ausgehend von einem geschlossenen Planenaufbau 10 zuerst freigegeben wird.

Weiter ist ein die Containerbreite überspannender Endanschlag 24 vorgesehen, der im Wesentlichen in einer Ebene senkrecht zu den Führungsschienen 20 liegt und eine umgedrehte U-Form aufweist, und mit den Enden des U an den dreieckigen Platten 22 angeschlossen ist. Beiderseits an dem Endanschlag 24 bzw. einem aufragenden Abschnitt der Platte 22 ist weiter ein kurzer U-förmiger Bügel 26 in einem Gelenk 27 jeweils gelenkig angeordnet, der zwischen einer schrägen Position unter einem Winkel von etwa 40° und einer angehobenen Position mit einem Winkel von etwa 90° zur Horizontalen in Richtung auf den Endanschlag 24 verschwenkbar ist.

Das Verdeckgestell 16 weist ferner eine entlang der Führungsschienen 20 bewegliche Schiebeverdeckanordnung 30 auf, die zum Freigeben der Beladeöffnung des Containers 14 geöffnet und zum Abdecken auch wieder verschlossen werden kann.

Die Schiebeverdeckanordnung 30 umfasst eine Mehrzahl von Schlitten 32, die entlang der Führungsschiene 20 verschoben werden können. Jeder bezüglich einer Längshalbierenden, das ist die vertikale Ebene, die mittig zwischen den Seitenwänden des Containers 14 angeordnet ist oder diejenige Ebene, die mittig und parallel zu den Führungsschienen 20 verläuft, gegenüberliegende Schlitten 32 ist über einen U-förmigen Holm 34 miteinander verbunden, wobei der Holm 34 zwei gebogene Eckstücke 34a und wahlweise ein langgestrecktes Verbindungsstück 34b aus einem Rundrohr aufweist, die zusammengesteckt sind, wodurch eine günstige Standardisierung der Teile erreicht wird. Alle an den Schlitten 32 vorgesehenen Holme 34 liegen auf derselben Höhe, die in etwa der Höhe der Plane 12 bei geschlossenem Planenaufbau 10 entspricht. Hierzu ist die Plane 12 über geeignete Anschlussmittel mit den Holmen 34 verbunden, beispielsweise über Schnallen oder Gurte oder in der Plane 12 ausgebildete Aufnahmen. Die Zahl der Schlitten 32 und damit der Holme 34 kann je nach Länge des Planenaufbaus 10 variieren.

An jedem Schlitten 32 ist ferner beiderseits des Holms 34 jeweils ein Schwenkbügel 36 über ein Gelenk 37 schwenkbar angelenkt, der ebenfalls über ein Winkelstück 36a und ein langgestrecktes Verbindungsstück 36b jeweils aus einem zylindrischen Rohr zusammengesteckt ist. Hierbei ist zu bemerken, dass an dem hintersten Paar von Schlitten 32 ein kurzer Schwenkbügel 36' vorgesehen ist, der unter einem steilen Winkel von etwa 40° zur Horizontalen absteht, während die weiteren Schwenkbügel 36 unter einem flachen Winkel von 20° zur Horizontalen abstehen. Die Schwenkbügel 36, 36' lassen sich jeweils in eine Winkelposition von etwa 90° zur Horizontalen hochschwenken.

An dem vordersten Schlitten 32' ist auf der von dem übrigen Verdeckgestell 16 fort weisenden Seite ein verstärkter Abdeckbügel 46 angeschlossen, der zwischen einer in Fig. 1 und 2 dargestellten im Wesentlichen horizontalen Position, also etwa 0° Neigung zur Horizontalen, und einer in Fig. 5 und 6 dargestellten vertikalen Position, also ca. 90° Neigung zur Horizontalen, schwenkbar ist. Die Schwenkbewegung des Abdeckbügels 46 spannt hierbei die Plane 12. Man erkennt, dass der Abdeckbügel 46 wiederum zwei gebogene Bügelabschnitte 46a und einen langgestreckten Rohrabschnitt 46b umfasst, die jedoch an zwei massiven Hebelarmen 46c angeschlossen sind, welche jeweils an einem der Schlitten 32' gelenkig angeschlossen sind.

Man erkennt weiter, dass der hinterste Schwenkbügel 36' und der an dem Endanschlag 24 angeschlossene Bügel 26 im geschlossenen Zustand eines Planenaufbaus 10 von einander beabstandet sind und nur über die Plane 12 in Verbindung stehen. Dies ermöglicht vorteilhaft einen Längenausgleich, sodass dieselben Bauteile auch unterschiedlich lange Container 14 überbauen können. So kann das Verdeckgestell 16, das vorliegend fünf Schlittenpaare 32, 32' aufweist, auch deutlich mehr oder weniger Schlittenpaare aufweisen, beispielsweise um das Dach eines LKWs abzudecken oder einen Transporter abzudecken.

Eine Besonderheit eines Planenaufbaus 10 für einen Container 14 besteht darin, dass der Container 14 eine hohe Steifigkeit aufweist, sodass das Verdeckgestell 16 den Formänderungen des Containers folgen muss. Diese können durch thermische Ausdehnung, beispielsweise bei heißer Befüllung, oder Deformation des Containers, beispielsweise durch die Masse der Befüllung oder durch mechanische Beschädigung, hervorgerufen werden. Daher ist ein Merkmal des Verdeckgestells, dass die U-förmigen Holme 34, Schwenkbügel 36 und Abdeckbügel 46 eine gewisse federnde Deformation in Y-Richtung, das ist die horizontale Achse quer zur Verlagerungsrichtung (X-Achse), zulassen. Damit kann das Verdeckgestell 16 Toleranzen von bis zu 50 mm ausgleichen, ohne dass es zu einer nachhaltigen Behinderung der Bewegung der Schlitten kommt. Da es bei der Manipulation des Containers 14 auch schon mal zu einer Beschädigung der Führungsschiene 20 kommen kann, ist diese vorteilhaft aus Teilstücken zusammengesetzt, die bei Bedarf jeweils gelöst und ausgetauscht oder geradegebogen werden können. Die vorstehend angegebenen Winkel bezeichnen auch den Winkel der Ebene, in der der Bügel liegt, zur Horizontalen - die Schwenkachse der Gelenke 25, 37 liegt jeweils in Y-Richtung.

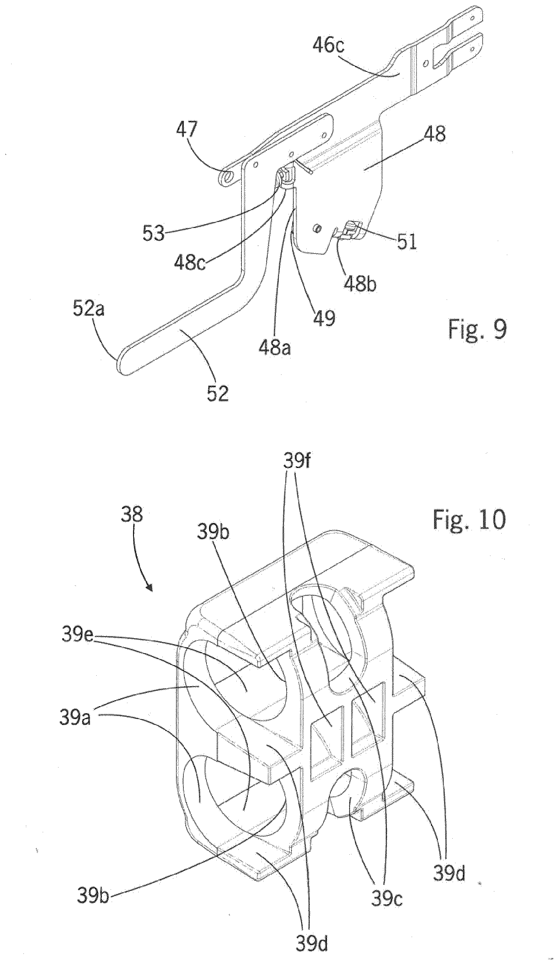

Einander zugekehrte Bügel 36 benachbarter Schlitten 32 sind im Bereich der Winkelstücke 36a über zwei Schwenkwinkelbegrenzer 38 miteinander verbunden, von denen einer insbesondere in Fig. 10 bis 16 vergrößert dargestellt ist. Da ein Verbindungsstück 36b ausreicht, um mit der Plane 12 durch die bereits genannten Anschlussmittel verbunden zu werden, ist das langgestreckte Verbindungsstück 36b eines der beiden Bügel 36, vorliegend jeweils des hinteren der beiden Bügel 36, weggelassen. Es ist aber auch möglich, an beiden miteinander verbundenen Bügeln 36 langgestreckte Verbindungsstücke 36b vorzusehen.

Man erkennt insbesondere in Fig. 2, dass im geschlossenen Zustand des Planenaufbaus 10 der von dem Schlitten 32 beabstandete Bereich der starren Holme 34 einerseits und der Schwenkbügel 36 andererseits auf einer Höhe liegt, sodass die Plane 12 im Wesentlichen in einer horizontalen Ebene liegt.

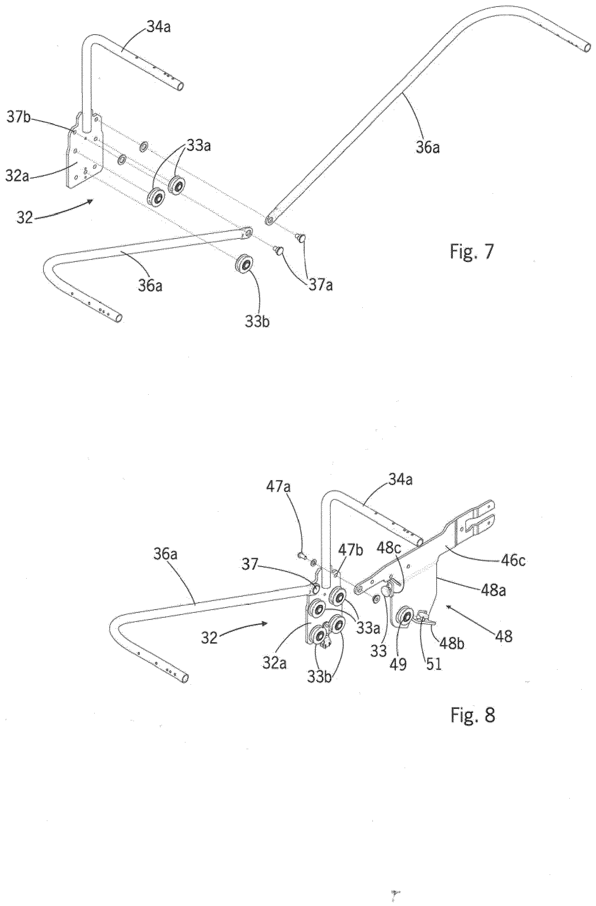

In Fig. 7 sind Einzelheiten der Anbindung der Holme 34 und Schwenkbügel 36 an einen Schlitten 32 im Einzelnen gezeigt. Der Schlitten 32 umfasst eine Schlittenplatte 32a, an der zwei obere Tragrollen 33a und eine untere Gegenrolle 33b gelenkig angeschlossen sind, die um eine Achse in Y-Richtung rotieren. Das gebogene Endstück 34a des Bügels 34 ist als um 90° gebogenes Rohrstück in einer vertikalen Ebene in Y-Richtung angeordnet und an einem oberen Ende der Schlittenplatte 32a angeschlossen. Die zwei Winkelstücke 36a der zwei Schwenkbügel 36 sind über Gelenkzapfen 37a an Bohrungen 37b in der Schlittenplatte 32a der Gelenke 37 angeschlossen. Man erkennt, dass für die Gelenke 37 keine Schwenkbegrenzung vorgesehen ist - daher werden die Schwenkbügel 36 über die Verbindung durch die Schwenkwinkelbegrenzer 38 und den Abstand der benachbarten Schlittenpaare in ihrer unteren Winkelposition gehalten.

In Fig. 8 sind Einzelheiten der Anbindung von Holm 34, Schwenkbügel 36 und Abdeckbügel 46 an einen vordersten Schlitten 32' im Einzelnen gezeigt. Der vorderste Schlitten 32' umfasst dieselbe Schlittenplatte 32a, an der zwei obere Tragrollen 33a und zwei untere Gegenrollen 33b gelenkig angeschlossen sind, die um eine Achse in Y-Richtung rotieren. Das gebogene Endstück 34a des Bügels 34 ist als um 90° gebogenes Rohrstück in einer vertikalen Ebene in Y-Richtung angeordnet und an einem oberen Ende der Schlittenplatte 32a angeschlossen. Ein Winkelstück 36a eines Schwenkbügel 36 ist in einem Gelenk 37 an die Schlittenplatte 32a angelenkt. An dem gegenüberliegenden Lagerauge 47b der Schlittenplatte 32a ist über einen Zapfen 47a der Hebelarm 46c des Abdeckbügels 46 gelenkig angeschlossen.

Man erkennt, dass in etwa mittig von dem Hebelarm 46c eine diesen seitlich verlängernde Gleiteinheit 48 ausgebildet ist, die eine Grundplatte 48a aufweist, an der eine zu den Tragrollen 33a und Gegenrollen 33b identische Tragrolle 49 gelenkig in Y-Richtung gelagert ist. Weiter ist an einer Umbiegung 48b der Grundplatte 48a eine kleine Führungsrolle 51 angeordnet. Die Umbiegung 48b ist so geformt, dass nach einem - weiter unten noch genauer erläuterten - Hochschwenken des Abdeckbügels 46 um etwa 30° die Führungsrolle 51 in einer horizontalen Ebene liegt, und sich im Zuge der Verlagerung der Schiebeverdeckanordnung 30 an der seitlichen Außenwand des Containers rollend abstützt. An einer weiteren Abbiegung 48c der Grundplatte 48a ist schließlich eine kleine Schwenkrolle 53 angeordnet, die annähernd normal auf der Ebene des Abdeckbügels 46 liegt und den Abdeckbügel bei seiner Verschwenkung gegen die seitliche Containerwand rollend führt, während die Führungsrolle dies nicht zu übernehmen vermag.

Fig. 9 zeigt den gegenüberliegenden Hebelarm 46c von hinten, wobei als Besonderheit an den Hebelarm 46c außenseitig noch ein massiver Doppelwinkel 52 aus Stahl angenietet ist, der ein dem Hebelarm 46c abgekehrtes, abgerundetes äußeres Ende 52a aufweist. Derjenige vordere Schlitten 32', an dem der Hebelarm 46c mit dem Doppelwinkel 52 angeschlossen ist, ist für die einseitige Bedienung der Schiebeverdeckanordnung 30 vorgesehen. Hierzu ist an diesem Schlitten 32' beispielsweise eine Zugschlaufe angenietet, die von einer Bedienperson gegriffen werden kann, um den Schlitten 32' mit den daran angeschlossenen Teilen in Öffnungs- oder in Schließrichtung zu ziehen.

Man erkennt in den Zeichnungen, dass die Rollen 33a, 33b, 49 jeweils eine genutete Umgangsfläche aufweisen, wobei die Nutbreite gleich oder geringfügig größer ist als die Schmalseite der rechteckigen Führungsschiene 20. Hierdurch zentrieren sich die Schlitten 32, 32' sowie die Gleiteinheit 48 selbständig an der Schmalseite der Führungsschiene 20, und es wird vorteilhaft vermieden, dass die Rollen von der Gleitschiene abrutschen können. Bei der Gleiteinheit 48, die keine Gegenrolle 33b aufweist und die daher von der Führungsschiene 20 abgehoben werden kann, übernimmt die Zentrierung in einer ersten Öffnungsphase und in einer letzten Öffnungsphase die Schwenkrolle 53, in einer mittleren Verlagerungsphase die Führungsrolle 51.

Jeder Schlitten 32, 32' weist zwei obere Tragrollen 33a und einer oder zwei Gegenrollen 33b auf, deren Umfangsfläche im genuteten Bereich mit einer oberen Schmalseite bzw. einer unteren Schmalseite der Führungsschiene 20 in Kontakt stehen. Beiderseits der Umfangsfläche weisen die Rollen 33a, 33b einen Flansch auf, der auch als Ringflansch bezeichnet wird, die die Breitseite der Führungsschiene 20, die in einer vertikalen Ebene liegt, über eine geringe Höhe, die dem Überstand der Ringflansche über der Umfangsfläche entspricht, einfassen. Der Überstand beträgt etwa einige Millimeter, so dass ausreichend Höhe der Führungsschiene 20 von etwa 40 mm verbleibt, um Schrauben zum Anschluss an den Container 14 durch die Breitseite etwa mittig zu setzen. Die Höhe der Rollen 33a, 33b beträgt gleichermaßen einschließlich Ringflansch 38 mm und ist damit geringer als die Höhe der Führungsschiene 20. Der Abstand der Führungsschiene 20 von der Außenwand ist gleich groß wie ihre Breite, nämlich 8 mm (oder auch 7,5 mm). Der Abstand der Außenseite der Schlitten 32, 32' zu der Außenseite der Führungsschiene 20 beträgt ca. 10 mm, so dass der Überstand der Verdeckgestells 16 über den Unterbau 14 in Y-Richtung auf jeder Seite weniger als 30 mm, vorzugsweise um die 25 mm ausmacht.

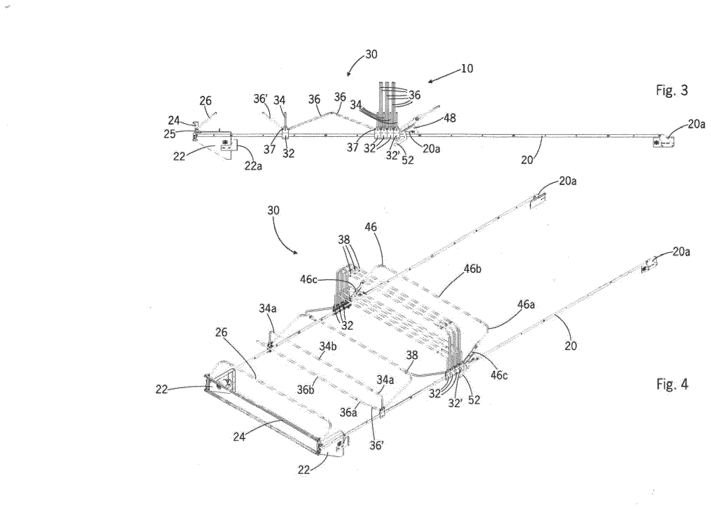

Man erkennt in Fig. 3 bis 6, dass das vordere Ende der Führungsschienen 20 in einen schräg abfallenden Rampenabschnitt 20a übergeht. Im geschlossenen Zustand des Planenaufbaus liegt die Tragrolle 49 der Gleiteinheit 48 auf diesem Rampenabschnitt 20a auf, so dass der Abdeckbügel in einer in etwa horizontalen geschlossenen Position gehalten ist. Hierdurch wird auch die Plane 12 gespannt.

An dem hinteren Ende der Führungsschiene 20 ist auf der Betätigungsseite an der dreieckigen Platte 22 ein Anschlagblech 22a angeschlossen, das eine Stirnseite 22b aufweist, die bei nahezu vollständig geöffneter Schiebeverdeckanordnung für das abgerundete Ende 52a des Doppelwinkels 52 einen Anschlag bildet, der den Schwenkbügel 46 zu einer Verschwenkung um die Achse 47 um etwa 60° zwingt. Es ist möglich, die Stirnseite 22b nach Art einer Rampe auszubilden, was zwar den beim Verschwenken erforderlichen Impuls herabsetzt, aber nachteilig dazu führen kann, dass durch Ausheben der Tragrolle 49 aus der Führungsschiene 20 die in den Schlitten 32' eingeleitete Kraft für den verbleibenden sehr kurzen Weg weniger gut auf die gegenüberliegende Seite eingeleitet werden kann.

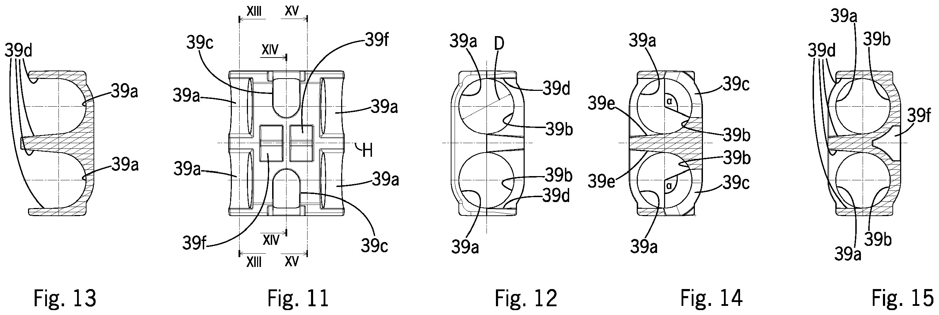

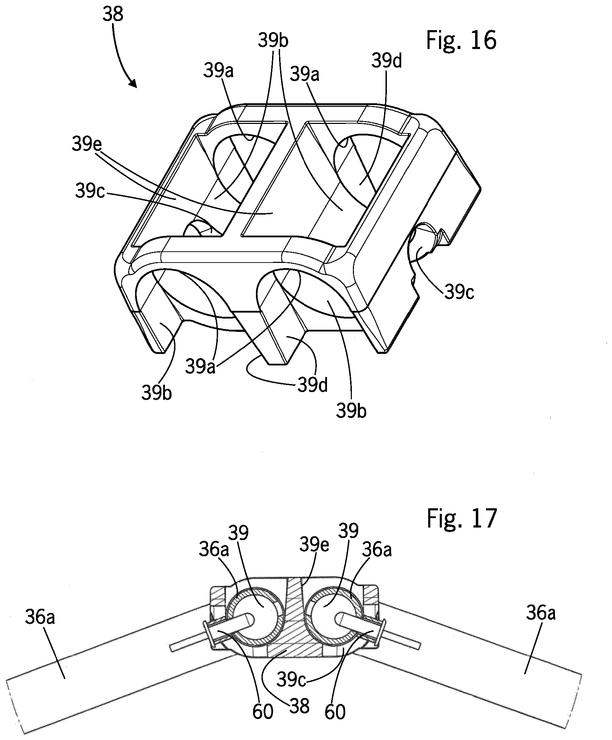

In Fig. 10 bis 16 ist der Schwenkwinkelbegrenzer 38 gezeigt, der jeweils zwei einander zugekehrte Winkelstücke 36a zweier benachbarter Schlitten 32 miteinander verbindet. Der Schwenkwinkelbegrenzer 38 ist als Kunststoffteil ausgebildet, das sich kostengünstig als Spritzgussteil herstellen lässt, und dient in erster Linie dazu, die Hochschwenkbewegung der beiden Schwenkbügel 36 zu führen und zu vermeiden, dass durch die in X-Richtung eingeleitete Kraft der in X-Richtung hintere Schwenkbügel 36 nicht abtaucht, was zu einem Blockieren der weiteren Hochschwenkbewegung der Schwenkbügel 36 führen würde. Der Schwenkwinkelbegrenzer 38 ist bezüglich der Achse H achssymmetrisch aufgebaut und weist beiderseits der Achse H jeweils einen Aufnahmeraum 39 für je einen Rohrabschnitt des Winkelstücks 36a der Schwenkbügel 36 auf. In Richtung der Achse H sind mehrere hintereinander angeordnete Bereiche vorgesehen, die jeweils komplementäre Halbschalen 39a bzw. 39b zur schwenkbeweglichen Lagerung der Rohrabschnitte enthalten, so dass die beiden Rohrabschnitte insgesamt vollständig umfangsmäßig geführt sind. Der breitere mittlere Abschnitt mit der Halbschale 39b weist eine schlitzartige Ausnehmung 39c auf, durch die ein Blindniet 60 (vgl. Fig. 17) eingesetzt werden kann, der die Schwenkbeweglichkeit des Rohrabschnitts auf einen Öffnungswinkel α der Ausnehmung 39c begrenzt. Nach Abzug der in Fig. 14 durch eine Markierung an den Enden der Schlitzes 39c angedeuteten Dicke des Blindniets 60 verbleibt in jeder Aufnahme 39 ein effektiver Schwenkwinkel von etwa 90°.

Es ist zu bemerken, dass die den Halbschalen 39a, 39b abgekehrten Flächen Aussparungen 39d, 39e enthalten, die ggfs. zum Entformen eine leichte Schräge aufweisen und die den Zugang eines Form-Werkzeugs jeweils von einer Seite ermöglichen. Weiterhin sind Sacklöcher 39f vorgesehen, die die erforderliche Kunststoffmenge reduzieren und die ein Schrumpfmaß der Spritzgussmasse vermeiden helfen. Hierdurch ist es möglich, den Schwenkwinkelbegrenzer 38 im Spritzgussverfahren mit einem zweigeteilten Werkzeug ohne Kern oder weitere bewegliche Teile herzustellen, wie sie sonst zur Herstellung von zylindrischen Öffnungen erforderlich sind: Ein Werkzeugteil bildet die Bereiche 39a, 39d, 39c, 39f, das andere Werkzeugteil bildet die Bereiche 39b, 39e. In Fig. 12 ist mit D der Durchmesser des zylindrischen Abschnitts 36 eingezeichnet, der in einer Aufnahme 39 aufgenommen werden kann.

In Fig. 17 ist der Schwenkwinkelbegrenzer 38 im eingebauten Zustand gezeigt, bei dem die Aufnahme 39 von den Rohrabschnitten der Schwenkbügel 36 durchsetzt ist, wobei ein Blindniet 60 radial aus dem Rohrabschnitt jeweils vorsteht und auch die Ausnehmung 39c durchsetzt, so dass der für den Rohrabschnitt mögliche Schwenkwinkel auf den Winkel α abzüglich der Stärke des Blindniets 60 begrenzt ist, also etwa 90° beträgt. Man erkennt in Fig. 17, dass die Blindniete 60 im geschlossenen Zustand des Planenaufbaus maximal voneinander weg weisen und dass bei Hochschwenken der Schwenkbügel 36 die beiden Blindniete 60 in eine nahezu parallele Stellung gelangen. Schwenkwinkelbegrenzer 38 vermeidet ein Abtauchen eines der Schwenkbügel 36 beim Öffnen des Planenaufbaus 10. Ferner koppelt der Schwenkwinkelbegrenzer 38 die beiden Schwenkbügel 36. Schließlich begrenzt der Schwenkwinkelbegrenzer 38 den zulässigen Schwenkwinkel der beiden Schwenkbügel 36, so dass die Plane 12 diese Aufgabe nicht übernehmen muss. Ein weiteres besonderes Merkmal des Schwenkwinkelbegrenzers 38 ist, dass er für den durchgehenden Schwenkbügel 36, also denjenigen Schwenkbügel 36, der das langgestreckte Verbindungsstück enthält und damit einen geschlossenen Bügel bildet, die direkte Koppelung von dem angetriebenen Schlitten 32 zu dem zugehörigen, bezüglich der Längshalbierenden gegenüberliegenden Schlitten 32 ermöglicht.

Das Verdeckgestellt 16 des Planenaufbaus kann Toleranzschwankungen im Abstand der beiden Führungsschienen 20 von bis zu +/- 50 mm ausgleichen, indem die Bügel 36, 47 und Holme 34 mit ihren Schenkeln voneinander fort gespreizt oder zueinander hin gestaucht werden. Die Elastiziät der Bügel 36, 47 und Holme 34 stellt dieses Spiel auf Höhe der Schlitten 32, 32' bereit.

Die Erfindung funktioniert nun wie folgt:
In der geschlossenen Position des Planenaufbaus 10, die in Fig. 1 und 2 gezeigt ist, ist der Abdeckbügel 46 gegen den Container 14 oder gegen die Führungsschiene 20 verriegelt, beispielsweise durch einen federbelasteten Bolzen, der eine Öffnung in dem Hebelarm 46c des Abdeckbügels 46 durchsetzt. Durch den abgesenkten Abdeckbügel 46 ist die Plane 12 gespannt, wobei die Plane 12 an zumindest einem der Holme 34 und der Schwenkbügel 36 festgelegt ist. Überdies ist die Plane 12 zweckmäßig im Bereich der Schlitten 32, 32' an diese angeschlossen, um auch seitlich den Raum, der durch den Planenaufbau 10 abgedeckt werden soll, möglichst blickdicht und zugriffssicher abzusichern. Es ist möglich, dass die Plane hierzu im Bereich ihres Saums Drähte oder dergleichen aufweist, die den Saum bei geschlossenem Planenaufbau 10 spannen, bei geöffnetem Planenaufbau 10 aber in der Lage sind, dem Anheben der Plane 12 aufgrund des Anhebens der durch zwei Schwenkbügel 36 gebildeten Planenfalthilfe zu folgen.

Ausgehend von dieser geschlossenen Position wird der Abdeckbügel 46 bzw. der vordere Schlitten 32' entriegelt, und die Bedienung des Verdeckgestells 16 kann von nur einer Seite erfolgen. Hierzu ist an den vordersten Schlitten 32', an dem auch der Doppelwinkel 52 vorgesehen ist, eine Schlaufe angeschlossen, die das Ziehen des vordersten Schlittens 32' ermöglicht. Die Bedienseite ist in Fig. 1 die vordere Seite. Wird der vordere Schlitten 32' in Richtung auf den Endanschlag 24 gezogen, treten mehrere kinematische Effekte ein.

Zum einen wird der Abdeckbügel 46 in eine um etwa 30° teilweise geöffnete Position verschwenkt, indem die an der Gleiteinheit 48 des Abdeckbügels 46 vorgesehene Tragrolle 49 die Rampe 20a hinaufbewegt wird und von oben auf die langgestreckte Führungsschiene 20 zum Aufliegen kommt. Da auf beiden Seiten des Verdeckgestells Rampen 20a an der Führung vorgesehen sind, bildet der recht steife Abdeckbügel 46 mit seinen Tragrollen 49 in einem kurzen Abstand hinter dem vordersten Schlitten 32 aufgrund der Gleiteinheit 48 eine Art Hilfsschlittenpaar, das einen erhöhten Deformationswiderstand gegen Aufspreizen aufweist, da sowohl der Abdeckbügel 46 als auch der Holm 34 diese Kombination aus vorderstem Schlittenpaar 32' und Gleiteinheitenpaar 48 in die Ausgangsposition vorspannen.

Zum anderen sind die beiden gegenüberliegenden vordersten Schlitten 32' weiter über einen durchgehenden Schwenkbügel 36 miteinander verbunden, der den Deformationswiderstand noch zusätzlich erhöht; allerdings ist zu beachten, dass ein Aufspreizen bzw. Zusammendrücken der vertikal angeordneten Schenkel von Holm 34, Schwenkbügel 36 und Abdeckbügel 46 erwünscht ist, da der Container 14, insbesondere wenn er mit schweren Materialen beladen ist, nicht nachgiebig ist und dementsprechend die Führungsschiene 20 den Deformationen des Containers 14 folgt, und die Schlitten 32, 32' dann der Führungsschiene folgen müssen. Das Verdeckgestell 16 muss also auch dann verlagerbar sein, wenn die beiden Führungsschienen 20 nicht vollständig parallel sind oder wenn die Breite des Containers vergrößert oder verkleinert ist.

Der an dem vordersten Schlittenpaar 32' angeschlossene Schwenkbügel 36 ist über zwei Schwenkwinkelbegrenzer 38 mit einem Schwenkbügel 36 des benachbarten Schlittens 32 verbunden, wobei bei dem hinteren Schwenkbügel 36 das langgestreckte Verbindungsstück 36b weggelassen ist, weil die Schwenkwinkelbegrenzer 38 an den Winkelstücken 36a angeschlossen sind. Hierdurch kann kostengünstig ein Teil eingespart werden. Das langgestreckte Verbindungsstück 36b des vorderen Schwenkbügels 36 oder Teile des Winkelstücks 36a, einschließlich derjenigen Teile, an denen der Schwenkwinkelbegrenzer 38 angeschlossen ist, sind in einer in Y-Richtung der Plane 12 vorgesehenen Tasche aufgenommen, wodurch eine Verbindung der Plane 12 mit dem durch die beiden Schwenkbügel 36 gebildeten Planenfalthilfsmittel gegeben ist. Wird der vordere Schlitten 32' ausgehend von der geschlossenen Position des Planenaufbaus 10 nach hinten verlagert, drückt das von dem vordersten Schlitten 32' beabstandete Ende des Schwenkbügels 36 gegen den benachbarten Schwenkbügel 36, wobei die Übertragung der Kraft-Komponente in X-Richtung durch die Schwenkwinkelbegrenzer 38 sicher und zuverlässig gewährleistet ist. Je nach Reibung der Schwenkbügel 36 in dem Schwenkwinkelbegrenzer 38 oder der Schlitten 32 an der Führungsschiene 20 bewegt sich entweder der Schlitten 32 entlang der Führungsschiene 20 oder die aus den beiden Schwenkbügeln 36 gebildete Planenfalthilfe stellt sich auf, indem die Schwenkbügel 36 in dem Schwenkwinkelbegrenzer 38 eine Schwenkbewegung ausführen, und da sich der Abstand der benachbarten Schlitten 32', 32 hierdurch verkürzt, die angeschlossene Plane 12 anheben.

In Fig. 3 und 4 ist die Ausführungsform dargestellt, bei der die Verlagerung des vorderen Schlittens 32' in X-Richtung zunächst die Schwenkbügel 36 anhebt, bis der vorderste Schlitten 32' an den benachbarten Schlitten 32 anschlägt oder in dessen Nachbarschaft gelangt, wodurch die Schwenkbügel 36 im Wesentlichen vertikal, also in einem Winkel von 90° zur Horizontalen aufgestellt sind. In dieser aufgestellten Position ist ein weiteres Verschwenken der Schwenkbügel 36 durch den Schwenkwinkelbegrenzer 38 unterbunden, sodass die in den vordersten Schlitten 32' eingeleitete Zugkraft in X-Richtung nunmehr auf den benachbarten Schlitten 32 übertragen wird, der in vergleichbarer Weise eine Faltung der Planenfalthilfe hinter ihm in die Wege leitet und dann den nächstfolgenden Schlitten 32 mitzieht, usw..

Sobald die Trägheit der noch nicht vollständig zusammenfalteten Schiebeverdeckanordnung 30 gering wird, wird die Schiebeverdeckanordnung 30 insgesamt nach hinten verlagert, und faltet sich dann im Bereich der hinteren Bügel 26 und 36', die an die Plane 12 angeschlossen sind, selbsttätig.

Die Trägheit bzw. die Reibung der einzelnen Komponenten kann zweckmäßig eingestellt werden, um ein anderes Aufstellverhalten zu erreichen. So kann es wünschenswert sein, erst die gesamte Schiebeverdeckanordnung 30 nach hinten zu verschieben und dann die Plane von hinten nach vorne zu falten, so dass die Planenfalthilfe aus den Schwenkbügeln 36 zwischen vorderstem Schlitten 32' und benachbartem Schlitten 32 als letztes aufgestellt wird. Diese Konstellation ist besonders deswegen vorteilhaft, weil die Führungseigenschaften der Schiebeverdeckanordnung 30 besonders günstig sind, wenn der Abstand zwischen den vordersten Schlitten 32' und dem benachbarten Schlittenpaar 32 groß ist, weil dann der Anstellwinkel der Schwenkbügel 36 noch gering ist. Die in X-Richtung übertragene Kraft ist dann wegen der größeren X-Komponente der über die Schwenkwinkelbegrenzer 38 verbundenen Schwenkbügel 36 besonders groß.

Um die Reihenfolge der Aufstellung der Planenfalthilfen, die aus den gekoppelten Schwenkbügeln 36 bestehen, zu steuern, gibt es mehrere Möglichkeiten: Zum einen kann die Masse der Schwenkbügel 36 vergrößert werden, beispielsweise indem das in den Zeichnungen als fehlend dargestellte langgestreckte Verbindungsstück 36b eingebaut wird, wodurch die erhöhte Gewichtskraft einem vorzeitigen Aufstellen des vordersten Schwenkbügelpaars 36 entgegenwirkt. Es ist auch möglich, die Schwenkbewegung der Schwenkbügel 36 in dem Schwenkwinkelbegrenzer 38 zu hemmen, beispielsweise indem der radial aus dem Schwenkbügel 36 austretende Zapfen 60 etwas größer ausgebildet ist. Schließlich kann auch umgekehrt die Neigung der anderen Schwenkbügel 36, sich vorzeitig aufzustellen, durch Federmittel unterstützt werden, beispielsweise indem die Zapfen 60, die radial aus dem Schwenkbügel 36 und dem Schwenkwinkelbegrenzer 38 vorstehen, mittels einer Zugfeder verbunden werden, die die Schwenkbewegung der entsprechenden Schwenkbügel 36 unterstützt.

Erreicht der vorderste Schlitten 32' einen Bereich kurz vor der vollständig geöffneten Position des Planenaufbaus 10, schlägt der Doppelwinkel 52 gegen den Anschlag 22a an, wodurch bei weiterer Verlagerung des Schlittens 32' in Schließrichtung der Abdeckbügel 46 um circa 60° heraufgeschwenkt wird, sodass er ebenso wie die anderen Schwenkbügel 36 in vertikaler Position zum Liegen kommt. Damit ist die Schiebeverdeckanordnung 30 maximal kompakt zusammengeschoben, und gibt die gesamte Beladeöffnung des Containers 14 frei. Auch in dieser Position kann die Schiebeverdeckanordung 30 beispielsweise mittels eines Riegels fixiert werden, um zu vermeiden, dass der Abdeckbügel 46 wieder herunterfällt.

Beim Hochschwenken des Abdeckbügels 46 durch Anschlagen des Doppelwinkels 52 gegen den Anschlag 22a gelangt die Tragrolle 49 der Gleiteinheit 48 des Abdeckbügels 46 außer Eingriff mit der Führungsschiene 20. Um zu vermeiden, dass hierdurch der Abdeckbügel 46 eine zu große Beweglichkeit gegenüber dem Container 14 bekommt, stützt die Schwenkrolle 53 sich gegen die dreieckige Platte 22 ab, sodass der Abdeckbügel 46 nicht verkanten kann. Die Führungsrolle 51, die in der Verfahrposition des Abdeckbügels 46 gegen eine Seitenwand des Containers gerichtet ist, ist kommt nur dann zum Einsatz, um eine Kollision des Abdeckbügels 46 mit dem Container zu vermeiden, wenn die Tragrolle 49 aus der Führung herausgleitet.

Die Schließbewegung erfolgt in umgekehrter Reihenfolge zu der Öffnungsbewegung, wobei auch hier die Krafteinleitung einseitig an dem vordersten Schlitten 32' erfolgt, beispielsweise über eine hieran angeschlossene Schlaufe. Es ist aber auch möglich, ein motorisch angetriebenes Zugmittel an einen der vordersten Schlitten 32' anzuschließen, um die Plane 12 automatisch zu öffnen und zu schließen. Während des Ziehens des vordersten Schlittens 32' entlang der Führungsschiene 20 entfalten sich wieder die Plane 12 und die Planenfalthilfen aus den Schwenkbügelpaaren 36, bis die Tragrolle 49 der Einheit 48 über die Rampe 20a nach vorne abrollt und den Abdeckbügel in eine horizontale Schließposition verlagert.

Bei der Verlagerung der Schiebeverdeckanordnung 30 in Öffnungsrichtung wird der Geradeauslauf durch zwei Effekte, die als Impulsübertragung zu erklären sind, begünstigt.

Die Tragrollen 49 des Abdeckbügels 46 bilden eine zu dem vordersten Schlittenpaar 32' parallele Achse, die nahe an der durch das vorderste Schlittenpaar 32' gebildeten Achse angeordnet ist und daher als nachlaufende Doppelachse bezeichnet werden kann. Da bei Einleiten einer Zugkraft in den einen vordersten Schlitten 32' auch ein Moment um eine vertikale Achse in die nachlaufende Doppelachse eingeleitet wird, und die nachlaufende Doppelachse annähernd wie eine starre Baueinheit wirkt, wird die Tragrolle 49 der diametral dem gezogenen vordersten Schlitten 32' gegenüberliegenden Gleiteinheit 48 in Richtung auf den Container 14 beaufschlagt. Hierdurch wird das System der nachlaufende Doppelachse in sich verspannt, und zeigt einen guten Geradeauslauf. Beim Schließen dreht das vertikale Moment in die entgegengesetzte Richtung, dann bewirkt es die Einleitung eines Impulses in die Tragrolle 49 der benachbart zu dem gezogenen vordersten Schlitten 32' angeordneten Gleiteinheit 48 in Richtung auf den Container 14. Da diese Impulse eine nicht unbedeutende Belastung der Tragrollen 49 in Y-Richtung bewirken, ist deren Geometrie, die die Führungsschiene 20 auch beiderseits seitlich einfasst, besonders vorteilhaft. Auch die für den Fall des Aushebens der Tragrollen 49 aus der Führungsschiene 20 vorgesehenen Führungsrollen 51 verhindern, dass der Impuls zu einer unkontrollierten Bewegung des Abdeckbügels 46 führt, da die Gleiteinheit 48 keine Gegenrolle aufweist.

Die Tragrollen 33a zu dem dem vordersten Schlittenpaar 32' benachbarten Schlittenpaar 32 bilden eine zu dem vordersten Schlittenpaar 32' parallele Achse, die durch das miteinander verbundene Bügelpaar 36 in variablem Abstand angeordnet ist und insbesondere bei konstantem, vorzugsweise maximalem Abstand voneinander eine vorlaufende Doppelachse bildet. Das bei Einleiten einer Zugkraft in den einen vordersten Schlitten 32' eingeleitete Moment um eine vertikale Achse wird auch in die vorlaufende Doppelachse eingeleitet, wobei wegen der eine Relativbewegung der aneinander gekoppelten Bügel 36 in Y-Richtung ausschließenden Schwenkwinkelbegrenzer 38 die beiden verbundenen Bügel 36 und das benachbarten Schlittenpaar 32 wie eine starre Baueinheit reagieren. Demnach wird die Tragrolle 33a und die Gegenrolle 33b des auf derselben Führungsschiene laufenden Schlittens 32 in Richtung auf den Container 14 beaufschlagt, wodurch die vorlaufende Doppelachse in sich verspannt wird und einen guten Geradeauslauf zeigt. Beim Öffnen unterstützt die Impulseinleitung ebenfalls den Geradeauslauf des vordersten Schlittenpaares 32'.

Besonders günstig ist die Ausführung mit Dreifachachse, nämlich nachlaufender Doppelachse und vorlaufender Doppelachse.

Bei der Erläuterung der Erfindung ist vorstehend als vorderster bzw. vorderer Bereich bzw. Schlitten derjenige definiert worden, der zu der die Öffnung bzw. Dachöffnung freigebenden Seite weist. Diese ist bei Containerns, Kippmulden oder Lastkraftwagen oft die entgegen der Fahrtrichtung weisende Seite. Daher ist definitionsgemäß die Öffnungsrichtung des Planenaufbaus von vorne nach hinten, und die Schließbewegung von hinten nach vorne.

Die Erfindung ist vorstehend anhand eines Ausführungsbeispiels erläutert worden, bei dem der Planenaufbau 10 einen Container 14 überdeckt. Es versteht sich, dass der Planenaufbau 10 auch zum Überdecken von anderen fahrbaren oder transportablen oder ortsfesten, im Wesentlichen quaderförmigen oder zumindest eine rechteckige Öffnung aufweisenden Unterbauten genutzt werden kann, beispielsweise für das Dach eines Lastkraftwagens, eines Lastkraftwagenanhängers, eines Busses, einer Kippmulde oder eines Sattelaufliegers, für das Dach eines Bahnwaggons, für ein stehendes Gebäude wie ein Carport oder ein Schwimmbad. Auch seitliche Öffnungen lassen sich abdecken, wobei dann die beschriebene Anordnung entsprechend um 90° auf der Seite liegend - ggfs. mit kleinen Modifikationen - eingesetzt wird.

Die Erfindung ist vorstehend anhand eines Ausführungsbeispiels erläutert worden, bei dem die Holme 34 abgewinkelte Eckstücke 34a enthalten. Es versteht sich, dass die Holme 34 auch nur aus einem langgestreckten Verbindungsstück wie dem Verbindungsstück 34b bestehen können, wobei die Flexibilität zum Toleranzausgleich in Y-Richtung beispielsweise durch einen teleskopierbaren Abschnitt gegeben sein kann.

Die Erfindung ist vorstehend anhand eines Ausführungsbeispiels erläutert worden, bei dem im geschlossenen Zustand des Planenaufbaus 10 die Oberkanten der Holme 34 und die Oberkanten der Schwenkbügel 36 auf derselben Höhe angeordnet sind, wodurch ein großer Abstand zwischen benachbarten Holmen 34 möglich ist, da die Plane 12 sowohl an den Schwenkbügeln 36 als auch den Holmen 34 angeschlossen ist. Hierdurch wird insbesondere auch erreicht, dass der Planenaufbau den Container 14 in Z-Richtung, also in der Vertikalen, um einen bestimmten Mindestabstand zumindest im geschlossenen Zustand überbaut, sodass geringfügig über die Füllhöhe des Containers 14 herausragenden Teile die Funktionalität des Planenaufbaus 10, insbesondere das Öffnen und Schließen, nicht blockieren. Es versteht sich, dass es auch möglich ist, die Höhe der Holme 34 und der Schwenkbügel 36 bei geschlossenem Planenaufbau unterschiedlich hoch anzuordnen.

Die Erfindung ist vorstehend anhand eines Ausführungsbeispiels erläutert worden, bei dem am hinteren Ende des Containers ein Endanschlag 24 ausgebildet ist. Es versteht sich, dass am hinteren Ende des Planenaufbaus 10 dieselbe Ausgestaltung wie am vorderen Ende gewählt sein kann, sodass sowohl das vordere Ende als auch das hintere Ende durch einen Abdeckbügel 46 verschlossen wird.

Die Erfindung ist vorstehend anhand eines Ausführungsbeispiels erläutert worden, bei dem die Länge der zwischen zwei Holmen miteinander verbundenen Schwenkbügel 36 untereinander gleich ist, während die Schwenkbügel 36', 26 jeweils kürzer ausgebildet waren. Es versteht sich, dass die Länge der Schwenkkbügel 36 auch verschieden bemessen sein kann, wodurch deren Masse beeinflusst wird und die Reihenfolge, in der die Plane 12 angehoben wird, ebenfalls vorteilhaft beeinflusst werden kann.

Die Erfindung ist vorstehend anhand eines Ausführungsbeispiels erläutert worden, bei dem der Toleranzausgleich über die Breite in Y-Richtung durch nachgiebige gebogene, als Rohrabschnitte verwirklichte Holme 34 bzw. Bügel 36 bewerkstelligt wurde. Es versteht sich, dass die Holme und Schwenkbügel auch mit anderen, wahlweise hohlen oder gefüllten Querschnitten ausgebildet sein können.

Die Erfindung ist vorstehend anhand eines Ausführungsbeispiels erläutert worden, bei dem dieselbe Grundplatte 32a für den vordersten Schlitten 32' mit zwei Gegenrollen 33b und für die Schlitten 32 mit einer Gegenrolle 33b benutzt wurde. Es versteht sich, dass die Schlitten 32 ebenfalls mit zwei Gegenrollen 33b ausgestattet sein können, und dass die Grundplatte 32a des vordersten Schlittens 32' auch anders geformt sein kann als die Grundplatte 32a der weiteren Schlitten 32.

Die Erfindung ist vorstehend anhand eines Ausführungsbeispiels erläutert worden, bei dem die Holme 34 und die Schwenkbügel 36 sowie der Abdeckbügel 46 U-förmig mit abgerundeten Ecken geformt sind, wobei die Schenkel der Holme und Bügel jeweils im Wesentlichen senkrecht zu den Basen der Holme 34 und Bügel 36, 46 angeordnet sind. Hierdurch wird vorteilhaft erreicht, dass die von den Schlitten 32, 32' abgehenden Teile der Holme 34 und Bügel 36, 46, also deren Schenkel, im Wesentlichen noch außerhalb der Beladeöffnung des Containers 14 angeordnet sind. Es versteht sich, dass es möglich ist, die Winkel zwischen Basis und Schenkel der Holme und Bügel auch mit einem kleineren oder größeren Winkel vorzusehen, sodass die Holme und Bügel dann im Wesentlichen trapezförmig erscheinen.

Die Erfindung ist vorstehend anhand eines Ausführungsbeispiels erläutert worden, bei dem die Länge der Schenkel der Schwenkbügel 36 für alle Schwenkbügelpaare gleich ist. Es versteht sich, dass sich die Länge der Schenkel auch verschieden lang einstellen lässt, beispielsweise zwei verschiedene Längen einer Paarung oder verschiedene Längen verschiedener Paarungen, wodurch sich das Aufstellverhalten der Planenfalthilfen steuern lässt.

Die Erfindung ist vorstehend anhand eines Ausführungsbeispiels erläutert worden, bei dem die Führungsschiene 20 aus mehreren Führungsschienenabschnitten, die jeweils einzeln an der Außenseite des Containers 14 angeschraubt sind, besteht. Es versteht sich, dass auch eine durchgehende Führungsschiene eingesetzt werden kann.

Die Erfindung ist vorstehend anhand eines Ausführungsbeispiels erläutert worden, bei dem die Führungsschienen 20 im Wesentlichen geradlinig verlaufen. Es versteht sich, dass die Führungsschienen auch eine gekrümmte Bahnkurve vollziehen können, und zwar sowohl in Richtung auf die Längshalbierende des Planenaufbaus als auch in vertikaler Richtung gekrümmt sowie Kombinationen hieraus.

## Patentansprüche

1. Planenaufbau für einen Unterbau, wie einen Lastkraftwagen, Anhänger, Auflieger, Bahnwaggon, Muldenkipper oder Container, umfassend
ein Verdeckgestell (16), und
eine Plane (12) aus wetterbeständigem Material,
wobei das Verdeckgestell (16) eine Mehrzahl von Holmen (34) aufweist, die endseitig jeweils einen Schlitten (32) aufweisen, der entlang einer Führung (20) verlagerbar ist,
wobei an jedem Paar gegenüberliegender Schlitten (32; 32') zumindest ein Bügel (36) schwenkbar angeschlossen ist, der mit einem Bügel (36) eines benachbarten Schlittenpaars (32) eine Planenfalthilfe bildet, wobei die Bügel (36) der Planenfalthilfe miteinander verbunden sind, wobei die verbundenen Bügel (36) durch einen Schwenkwinkelbegrenzer (38) verbunden sind, der nur eine begrenzte Verschwenkung der Bügel (36) zulässt,
**dadurch gekennzeichnet,**
**dass** der Schwenkwinkelbegrenzer (38) zwei Aufnahmen (39) zur parallelen Aufnahme von zwei zylindrischen Abschnitten der Bügel (36) aufweist, und
**dass** die zylindrischen Abschnitte eine schlitzartige Ausnehmung (39c) aufweisen, durch die ein von dem Bügel (36) radial vorstehendes Teil (60) gefangen ist.

2. Planenaufbau nach Anspruch 1, **dadurch gekennzeichnet, dass** die miteinander verbundenen Bügel (36) in Verschieberichtung axial voneinander beabstandet sind, und dass der Abstand praktisch spielfrei von dem die Bügel (36) verbindenden Schwenkwinkelbegrenzer (38) ausgefüllt ist.

3. Planenaufbau nach einem der vorhergehenden Ansprüche, **dadurch gekennzeichnet, dass** der Schwenkwinkelbegrenzer (38) als einstückiges Kunststoffteil ausgebildet ist.

4. Planenaufbau nach einem der vorhergehenden Ansprüche, **dadurch gekennzeichnet, dass** an jedem Paar aneinandergrenzender Bügel (36) zwei Schwenkwinkelbegrenzer (38) angeordnet sind.

5. Planenaufbau nach einem der vorhergehenden Ansprüche, **dadurch gekennzeichnet, dass** die Verschwenkung des Bügels (36) in dem Schwenkwinkelbegrenzer (38) auf ca. 90° begrenzt ist.

6. Planenaufbau nach einem der Ansprüche 1 bis 5, **dadurch gekennzeichnet, dass** der Schwenkwinkelbegrenzer (38) die verbundenen Bügel (36) gegen eine gegenseitige Verlagerung in eine Richtung (Y) parallel zu ihren Achsen hindert.

7. Planenaufbau nach einem der vorhergehenden Ansprüche, **dadurch gekennzeichnet, dass** nur einer der in dem Schwenkwinkelbegrenzer (38) aufgenommenen Bügel (36) ein mittleres langgestrecktes Verbindungsstück (36b) aufweist.

8. Planenaufbau nach einem der vorhergehenden Ansprüche, **dadurch gekennzeichnet, dass** die Bügel (36) im geschlossenen Zustand des Planenaufbaus einen flachen Winkel von weniger als 45° gegen die Horizontale, vorzugsweise von weniger als 35° gegen die Horizontale, besonders bevorzugt von weniger als 25° gegen die Horizontale und im besten Fall von ca. 17° bis 23°, optimalerweise ca. 20° gegen die Horizontale einnehmen.

9. Planenaufbau nach einem der vorhergehenden Ansprüche, **dadurch gekennzeichnet, dass** die Holme (34) U-förmig ausgeführt sind, und dass eine Basis (34b) des U-förmigen Holms (34) im geschlossenen Zustand des Planenaufbaus auf derselben Höhe angeordnet ist wie dem Schlitten (32; 32') abgekehrte Bereiche (36b) der Bügel (36).

10. Planenaufbau nach einem der vorhergehenden Ansprüche, **dadurch gekennzeichnet, dass** an dem vordersten Schlittenpaar (32') ein Abdeckbügel (46) schwenkbar angeschlossen ist, der zwischen einer im Wesentlichen horizontalen Position und einer im Wesentlichen vertikalen Position schwenkbar ist.

11. Planenaufbau nach Anspruch 10, **dadurch gekennzeichnet, dass** eine Verschwenkung des Abdeckbügels (46) in eine aufrechte Öffnungsposition durch in Kontakt bringen eines Fortsatzes (52) des Abdeckbügels (46) mit einem Gegenstück (22a) erfolgt.

12. Planenaufbau nach Anspruch 10 oder 11, **dadurch gekennzeichnet, dass** an dem Abdeckbügel (46) zumindest eine Schwenkrolle (53) angeordnet ist, die den Abdeckbügel (46) während einer Schwenkbewegung gegen den Unterbau abstützt und deren Achse in etwa senkrecht zu einer Schwenkachse (47) des Abdeckbügels (46) angeordnet ist.

13. Planenaufbau nach einem der vorhergehenden Ansprüche, **dadurch gekennzeichnet, dass** die Bügel (36, 46) in einer Querrichtung (Y) zu der Verlagerungsrichtung (X) nachgiebig ausgebildet sind und/oder dass die Holme (34) in einer Querrichtung (Y) zu der Verlagerungsrichtung (X) nachgiebig ausgebildet sind.

14. Schwenkwinkelbegrenzer zum Einsatz in einem Planenaufbau nach einem der vorhergehenden Ansprüche, **dadurch gekennzeichnet, dass** zwei Aufnahmen (39) zur parallelen Aufnahme von zwei zylindrischen Abschnitten vorgesehen sind, die jeweils umfangsmäßige Lagerabschnitte (39a, 39b) aufweisen, wobei in einem der umfangsmäßigen Lagerabschnitte (39b) eine schlitzartige Ausnehmung (39c) gebildet ist, durch die ein von dem zylindrischen Abschnitt radial vorstehender Stift einsetzbar ist, dessen Schwenkwinkel begrenzt wird.

15. Schwenkwinkelbegrenzer nach Anspruch 14, **dadurch gekennzeichnet, dass** dieser in einem zweiteiligen Werkzeug durch Spritzgießen hergestellt ist.

## Claims

1. A tarpaulin structure for a substructure, such as a heavy goods vehicle, trailer, semitrailer, railway carriage, tipper truck or container, comprising
a top frame (16), and
a tarpaulin (12) composed of weather-resistant material,
wherein the top frame (16) has a multiplicity of beams (34) which have, on the ends, in each case a carriage (32) which is displaceable along a guide (20),
wherein, to each pair of oppositely situated carriages (32; 32'), there is pivotably attached at least one bow (36) which, together with a bow (36) of an adjacent carriage pair (32), forms a tarpaulin folding aid, wherein the bows (36) of the tarpaulin folding aid are connected to one another,
wherein the connected bows (36) are connected by way of a pivot angle limiter (38) which permits only a limited pivoting movement of the bows (36),
**characterized in**
**that** the pivot angle limiter (38) has two receptacles (39) for receiving, in parallel, two cylindrical sections of the bows (36), and
**that** the cylindrical sections have a slot-like recess (39c) by way of which a part (60) which protrudes radially from the bow (36) is captively held.

2. The tarpaulin structure as claimed in claim 1, **characterized in that** the interconnected bows (36) are spaced apart axially from one another in the displacement direction, and that the spacing is filled, practically without play, by the pivot angle limiter (38) which connects the bows (36).

3. The tarpaulin structure as claimed in one of the preceding claims, **characterized in that** the pivot angle limiter (38) is in the form of a unipartite plastics part.

4. The tarpaulin structure as claimed in one of the preceding claims, **characterized in that** two pivot angle limiters (38) are arranged on each pair of mutually adjacent bows (36).

5. The tarpaulin structure as claimed in one of the preceding claims, **characterized in that** the pivoting of the bow (36) is limited, in the pivot angle limiter (38), to approximately 90°.

6. The tarpaulin structure as claimed in one of claims 1 to 5, **characterized in that** the pivot angle limiter (38) prevents the connected bows (36) from performing a relative displacement in a direction (Y) parallel to their axes.

7. The tarpaulin structure as claimed in one of the preceding claims, **characterized in that** only one of the bows (36) received in the pivot angle limiter (38) has a central, elongate connecting piece (36b).

8. The tarpaulin structure as claimed in one of the preceding claims, **characterized in that** the bows (36), in the closed state of the tarpaulin structure, assume a shallow angle of less than 45° relative to the horizontal, preferably of less than 35° relative to the horizontal, particularly preferably of less than 25° relative to the horizontal and in the best case of approximately 17° to 23°, optimally approximately 20°, relative to the horizontal.

9. The tarpaulin structure as claimed in one of the preceding claims, **characterized in that** the beams (34) are of U-shaped form, and that a base (34b) of the U-shaped beam (34) is, in the closed state of the tarpaulin structure, arranged at the same height as those regions (36b) of the bows (36) which are averted from the carriage (32; 32').

10. The tarpaulin structure as claimed in one of the preceding claims, **characterized in that** a covering bow (46) is pivotably attached to the foremost carriage pair (32'), which is pivotable between a substantially horizontal position and a substantially vertical position.

11. The tarpaulin structure as claimed in claim 10, **characterized in that** the pivoting of the covering bow (46) into an upright opening position is realized by virtue of a projection (52) of the covering bow (46) being brought into contact with a counterpart (22a).

12. The tarpaulin structure as claimed in claim 10 or 11, **characterized in that**, on the covering bow (46), there is arranged at least one pivot roller (53) which supports the covering bow (46) during a pivoting movement against the substructure and whose axis is arranged approximately perpendicular to a pivot axis (47) of the covering bow (46).

13. The tarpaulin structure as claimed in one of the preceding claims, **characterized in that** the bows (36, 46) are formed so as to be flexible in a transverse direction (Y) relative to the displacement direction (X), and/or that he beams (34) are formed so as to be flexible in a transverse direction (Y) relative to the displacement direction (X).

14. A pivot angle limiter for use in a tarpaulin structure as claimed in one of the preceding claims, **characterized in that** two receptacles (39) for receiving, in parallel, two cylindrical sections are provided, which receptacles each have circumferential bearing sections (39a, 39b), wherein, in at least one of the circumferential bearing sections (39b), there is formed a slot-like recess (39c) through which a pin projecting radially from the cylindrical section can be inserted, the pivot angle of which pin is limited.

15. The pivot angle limiter as claimed in claim 14, **characterized in that** said pivot angle limiter is produced in a two-part tool by injection molding.

## Revendications

1. Structure de bâche destinée à une infrastructure telle qu'un camion, une remorque, un semi-remorque, un wagon ferroviaire, un camion à benne basculante ou un conteneur, ladite structure de bâche comprenant
un cadre de recouvrement (16), et
une bâche (12) en matériau résistant aux intempéries,
le cadre de recouvrement (16) comportant une pluralité de longerons (34) qui comportent chacun à l'extrémité un chariot (32) qui peut être déplacé le long d'un guide (20),
au moins un arceau (36) étant raccordé de manière pivotante à chaque paire de chariots opposés (32 ; 32') et formant avec un arceau (36) d'une paire de chariots adjacente (32) un auxiliaire de pliage de bâche,
les arceaux (36) de l'auxiliaire de pliage de bâche étant reliés les uns aux autres,
les arceaux reliés (36) étant reliés par un limiteur d'angle de pivotement (38) qui ne permet qu'un pivotement limité des arceaux (36), **caractérisée en ce**
**que** le limiteur d'angle de pivotement (38) comporte deux logements (39) destinés à recevoir en parallèle deux portions cylindriques des arceaux (36), et
**que** les portions cylindriques comportent un évidement (39c) en forme de fente qui capture une partie (60) saillant radialement de l'arceau (36).

2. Structure de bâche selon la revendication 1, **caractérisée en ce que** les arceaux (36) reliés entre eux sont espacés axialement les uns des autres dans la direction de déplacement, et **en ce que** la distance est remplie pratiquement sans jeu par le limiteur d'angle de pivotement (38) reliant les arceaux (36).

3. Structure de bâche selon l'une des revendications précédentes, **caractérisée en ce que** le limiteur d'angle de pivotement (38) est réalisé sous la forme d'une pièce en matière synthétique monobloc.

4. Structure de bâche selon l'une des revendications précédentes, **caractérisée en ce que** deux limiteurs d'angle de pivotement (38) sont disposés au niveau de chaque paire d'arceaux adjacents (36).

5. Structure de bâche selon l'une des revendications précédentes, **caractérisée en ce que** le pivotement de l'arceau (36) dans le limiteur d'angle de pivotement (38) est limité à environ 90°.

6. Structure de bâche selon l'une des revendications 1 à 5, **caractérisée en ce que** le limiteur d'angle de pivotement (38) empêche les arceaux reliés (36) de se déplacer les uns par rapport aux autres dans une direction (Y) parallèle à leurs axes.

7. Structure de bâche selon l'une des revendications précédentes, **caractérisée en ce qu'**un seul des arceaux (36) reçus dans le limiteur d'angle de pivotement (38) comporte une pièce de liaison allongée médiane (36b).

8. Structure de bâche selon l'une des revendications précédentes, **caractérisée en ce que**, lorsque la structure de bâche est fermée, l'arceau (36) fait un angle plat de moins de 45° par rapport à l'horizontale, de préférence de moins de 35° par rapport à l'horizontale, de manière particulièrement préférée de moins de 25° par rapport à l'horizontale et dans le meilleur des cas d'environ 17° à 23°, idéalement d'environ 20° par rapport à l'horizontale.

9. Structure de bâche selon l'une des revendications précédentes, **caractérisée en ce que** les longerons (34) sont en forme de U, et **en ce que**, lorsque la structure de bâche est fermée, une base (34b) du longeron (34) en forme de U est disposée à la même hauteur que des régions (36b) des arceaux (36) qui sont opposées au chariot (32 ; 32').

10. Structure de bâche selon l'une des revendications précédentes, **caractérisée en ce qu'**un arceau de recouvrement (46) est relié de manière pivotante à la paire de chariots la plus avant (32') et peut pivoter entre une position sensiblement horizontale et une position sensiblement verticale.

11. Structure de bâche selon la revendication 10, **caractérisée en ce que** le pivotement de l'arceau de recouvrement (46) jusque dans une position ouverte verticale est effectué par mise en contact d'une extension (52) de l'arceau de recouvrement (46) avec une pièce homologue (22a).

12. Structure de bâche selon la revendication 10 ou 11, **caractérisée en ce qu'**au moins un galet pivotant (53), qui supporte l'arceau de recouvrement (46) lors d'un mouvement de pivotement vers l'infrastructure et dont l'axe est disposé approximativement perpendiculairement à un axe de pivotement (47) de l'arceau de recouvrement (46), est disposé au niveau de l'arceau de recouvrement (46).

13. Structure de bâche selon l'une des revendications précédentes, **caractérisée en ce que** les arceaux (36, 46) sont conçus pour être flexibles dans une direction transversale (Y) par rapport à la direction de déplacement (X) et/ou **en ce que** les longerons (34) sont conçus pour être flexibles dans une direction transversale (Y) par rapport à la direction de déplacement (X).

14. Limiteur d'angle de pivotement destiné à être utilisé dans une structure de bâche selon l'une des revendications précédentes, **caractérisé en ce que** deux logements (39) sont prévus pour recevoir en parallèle deux portions cylindriques qui comportent chacune des portions de palier circonférentielles (39a, 39b), un évidement en forme de fente (39c), à travers lequel peut être insérée une tige qui fait saillie radialement de la portion cylindrique et dont l'angle de pivotement est limité, étant ménagé dans l'une des portions de palier circonférentielles (39b).

15. Limiteur d'angle de pivotement selon la revendication 14, **caractérisé en ce qu'**il est fabriqué par moulage par injection dans un outil en deux parties.
